(19) **Europäisches Patentamt / European Patent Office / Office européen des brevets**

(11) **EP 4 664 810 A1**

(12) **EUROPEAN PATENT APPLICATION**
published in accordance with Art. 153(4) EPC

(43) Date of publication:
**17.12.2025   Bulletin 2025/51**

(21) Application number: **24752738.5**

(22) Date of filing: **30.01.2024**

(51) International Patent Classification (IPC):
**H04L 5/00** (2006.01)

(52) Cooperative Patent Classification (CPC):
**H04L 5/00; H04W 72/0453; H04W 72/232**

(86) International application number:
**PCT/CN2024/074650**

(87) International publication number:
**WO 2024/164882 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **09.02.2023   CN 202310147657**

(71) Applicant: **Datang Mobile Communications Equipment Co., Ltd.**
**Beijing 100085 (CN)**

(72) Inventors:
• **ZHU, Min**
  **Beijing 100085 (CN)**
• **WANG, Junwei**
  **Beijing 100085 (CN)**
• **XING, Yanping**
  **Beijing 100085 (CN)**
• **GAO, Xuejuan**
  **Beijing 100085 (CN)**

(74) Representative: **Maiwald GmbH**
**Engineering**
**Elisenhof**
**Elisenstrasse 3**
**80335 München (DE)**

(54) **INFORMATION PROCESSING METHOD, APPARATUS, TERMINAL, AND NETWORK DEVICE**

(57)   Provided are an information processing method and apparatus, a terminal and a network device, which relates to the technical field of communications. The method includes: receiving, by a terminal, downlink control information (DCI) sent by a network device, where the DCI includes a first indication field for indicating frequency-domain resource allocation of at least one carrier; determining, by the terminal, a frequency-domain resource allocation granularity corresponding to each carrier in the at least one carrier; and determining, by the terminal, a quantity of bits corresponding to each carrier in the first indication field based on the frequency-domain resource allocation granularity corresponding to each carrier.

receiving, by a terminal, a DCI sent by a network device, where the DCI includes a first indication field for indicating frequency-domain resource allocation of at least one carrier — 21

determining, by the terminal, a frequency-domain resource allocation granularity corresponding to each carrier in the at least one carrier — 22

determining, by the terminal, a quantity of bits occupied by each carrier in the first indication field based on the frequency-domain resource allocation granularity corresponding to each carrier — 23

FIG. 2

**Description**

**CROSS-REFERENCE TO RELATED APPLICATION**

This application claims a priority of Chinese Patent Application No. 202310147657.X entitled "Information Processing Method And Apparatus, Terminal And Network Device" filed on February 9, 2023, the entire contents of which are hereby incorporated by reference in their entirety.

**TECHNICAL FIELD**

The present disclosure relates to the technical field of communications, and in particular to an information processing method and apparatus, a terminal and a network device.

**BACKGROUND**

In new radio (New Radio, NR) related technologies, a single downlink control information (Downlink Control Information, DCI) is used to schedule a physical downlink shared channel (Physical downlink shared channel, PDSCH) or a physical uplink shared channel (Physical uplink shared channel, PUSCH) on one carrier. With the emergence of more scattered spectrum and large-bandwidth spectrum resources, the demand for scheduling multiple carriers simultaneously has increased. To reduce the overhead of control signaling, a technical solution of using one DCI to schedule PDSCH or PUSCH on multiple carriers is considered. However, there is currently no specific solution for how a DCI for multi-carrier scheduling indicates frequency-domain resource allocation of one or more carriers.

**SUMMARY**

The present disclosure provides an information processing method and apparatus, a terminal and a network device, to solve a problem that there is currently no specific solution for how a DCI for multi-carrier scheduling indicates frequency-domain resource allocation of one or more carriers.

An embodiment of the present disclosure provides an information processing method, including:

receiving, by a terminal, downlink control information (DCI) sent by a network device, where the DCI includes a first indication field for indicating frequency-domain resource allocation of at least one carrier;
determining, by the terminal, a frequency-domain resource allocation granularity corresponding to each carrier in the at least one carrier; and
determining, by the terminal, a quantity of bits corresponding to each carrier in the first indication field based on the frequency-domain resource allocation granularity corresponding to each carrier.

Optionally, the determining, by the terminal, the frequency-domain resource allocation granularity corresponding to each carrier in the at least one carrier includes:

determining, by the terminal, the frequency-domain resource allocation granularity corresponding to each carrier in the at least one carrier based on a number of physical resource blocks (PRBs) of a first bandwidth part (BWP) on the at least one carrier; or,
determining, by the terminal, the frequency-domain resource allocation granularity corresponding to each carrier in the at least one carrier based on higher-layer parameter configuration by the network device or agreement by a protocol.

Optionally, the determining, by the terminal, the frequency-domain resource allocation granularity corresponding to each carrier in the at least one carrier based on the number of the physical resource blocks (PRBs) of the first bandwidth part (BWP) on the at least one carrier includes:

determining, by the terminal, a total number of PRBs of a first BWP on at least one schedulable carrier configured by the DCI;
determining, by the terminal, a first frequency-domain resource allocation granularity corresponding to the total number of PRBs of the first BWP based on a mapping relationship between different PRB numerical ranges and frequency-domain resource allocation granularities, where a maximum value in the PRB numerical ranges is a maximum total number of PRBs configurable for the at least one schedulable carrier configured by the DCI; and
determining, by the terminal, the first frequency-domain resource allocation granularity as the frequency-domain resource allocation granularity corresponding to each carrier in the at least one carrier.

Optionally, a maximum value of the frequency-domain resource allocation granularities in the mapping relationship is greater than 16.

Optionally, the determining, by the terminal, the frequency-domain resource allocation granularity corresponding to each carrier in the at least one carrier based on the number of the physical resource blocks (PRBs) of the first bandwidth part (BWP) on the at least one carrier includes:

for each carrier in the at least one carrier, determining, by the terminal, a number of PRBs of a first BWP on a first carrier, where the first carrier is any carrier of the at least one carrier;

determining, by the terminal, a second frequency-domain resource allocation granularity corresponding to the number of the PRBs of the first BWP on the first carrier based on a mapping relationship between different PRB numerical ranges and frequency-domain resource allocation granularities, where a maximum value in the PRB numerical ranges is a maximum number of PRBs configurable for one carrier; and

determining, by the terminal, the frequency-domain resource allocation granularity corresponding to the first carrier based on the second frequency-domain resource allocation granularity.

Optionally, the determining, by the terminal, the frequency-domain resource allocation granularity corresponding to the first carrier based on the second frequency-domain resource allocation granularity includes:

determining, by the terminal, a product of the second frequency-domain resource allocation granularity and a preset value as the frequency-domain resource allocation granularity corresponding to the first carrier,

where the frequency-domain resource allocation granularity in the mapping relationship satisfies: $P = 2^n$, where P is the frequency-domain resource allocation granularity, $1 \leq n \leq N$ and $N \geq 4$; the preset value is $2^m$ or A, $m \geq 0$, $A \geq 1$, and n, N, m and A are integers.

Optionally, the frequency-domain resource allocation granularity in the mapping relationship satisfies: $P = B * 2^n$, where P is the frequency-domain resource allocation granularity, $1 \leq n \leq N$, $N \geq 4$, $B \geq 1$, and n, B, N are integers.

Optionally, the first BWP is an activated BWP on a carrier in an activated state; and/or, the first BWP is a preset BWP on a carrier in a deactivated state or on a carrier without any activated BWP. The preset BWP is one of the following:

a BWP with a smallest BWP index;
a BWP with a largest BWP index;
a BWP with a largest number of PRBs;
a BWP with a smallest number of PRBs; or,
a BWP indicated in the DCI.

Optionally, the determining, by the terminal, the frequency-domain resource allocation granularity corresponding to each carrier in the at least one carrier based on the higher-layer parameter configuration by the network device or the agreement by the protocol includes:

receiving, by the terminal, a higher-layer parameter sent by the network device, and determining the frequency-domain resource allocation granularity corresponding to each carrier in the at least one carrier based on a frequency-domain resource allocation granularity carried in the higher-layer parameter; and/or,

determining the frequency-domain resource allocation granularity corresponding to each carrier in the at least one carrier based on a preset frequency-domain resource allocation granularity, where the preset frequency-domain resource allocation granularity is configured by the network device or agreed upon by the protocol.

Optionally, the frequency-domain resource allocation granularity carried in the higher-layer parameter is a frequency-domain resource allocation granularity jointly configured for the at least one carrier; or,

the frequency-domain resource allocation granularity carried in the higher-layer parameter is a frequency-domain resource allocation granularity configured separately for each carrier in the at least one carrier.

Optionally, a resource allocation type corresponding to the at least one carrier includes: a first resource allocation type and/or a second resource allocation type, where a bit map is used in the first indication field to indicate frequency-domain resource allocation of a carrier of a first resource allocation type, and/or a resource indication value (RIV) is used in the first indication field to indicate frequency-domain resource allocation of a carrier of a second resource allocation type;

where the determining, by the terminal, the frequency-domain resource allocation granularity corresponding to each carrier in the at least one carrier includes:

determining, by the terminal, a frequency-domain resource allocation granularity corresponding to each carrier of the first resource allocation type based on a number of PRBs of a first BWP on the at least one carrier; or,

determining, by the terminal, a frequency-domain resource allocation granularity corresponding to each carrier of the first resource allocation type or the second resource allocation type based on higher-layer parameter configuration by the network device or agreement by a protocol.

Optionally, the determining, by the terminal, the quantity of bits corresponding to each carrier in the first indication field based on the frequency-domain resource allocation granularity corresponding to each carrier includes:

determining, by the terminal, a number of resource block groups (RBGs) corresponding to a first BWP on each carrier based on the frequency-domain resource allocation granularity corresponding to each carrier and a number of PRBs of the first BWP on each carrier;

determining, by the terminal, a number of bits occupied by each carrier in the first indication field based on the number of the RBGs corresponding to the first BWP on each carrier; and

determining, by the terminal, the bit position corresponding to each carrier in the first indication field according to the number of the bits occupied by each carrier in the first indication field, and a predetermined order of the at least one carrier.

Optionally, the number of the RBGs corresponding to the first BWP on each carrier is determined by the following formula: $N_{RBG}^{CCi} = \left\lceil \left( N_{BWP,k}^{size,CCi} + \left( N_{BWP,k}^{start,CCi} \bmod P \right) \right) / P \right\rceil$, where $N_{RBG}^{CCi}$ is a number of RBGs corresponding to the first BWP on an i-th carrier in the at least one carrier, $N_{BWP,k}^{size,CCi}$ is a number of PRBs of the first BWP on the i-th carrier, $N_{BWP,k}^{start,CCi}$ is an index of a starting PRB of the first BWP on the i-th carrier, and P is the frequency-domain resource allocation granularity.

Optionally, the determining, by the terminal, the number of the bits occupied by each carrier in the first indication field based on the number of the RBGs corresponding to each carrier includes:

for each carrier, determining, by the terminal, the number of the RBGs as the number of the bits occupied by the carrier in the first indication field; or,

for each carrier, determining, by the terminal, the number of bits occupied by the carrier in the first indication field by using a formula $L_{cci} = \log_2 \left( N_{RBG}^{CCi} (N_{RBG}^{CCi} + 1) / 2 \right)$, where $L_{cci}$ is a number of bits occupied by an i-th carrier in the first indication field, and $N_{RBG}^{CCi}$ is a number of RBGs corresponding to the i-th carrier.

Optionally, the predetermined order is one of the following:

cell indexes of cells correspond to indexes of all carriers in ascending order; or
cell indexes of cells correspond to indexes of all carriers in descending order.

An embodiment of the present disclosure provides an information processing method, including:

determining, by a network device, a frequency-domain resource allocation granularity corresponding to each carrier in at least one carrier;

generating, by the network device, a first indication field based on the frequency-domain resource allocation granularity corresponding to each carrier, where the first indication field is used to indicate frequency-domain resource allocation of the at least one carrier; and

sending, by the network device, downlink control information (DCI) to a terminal, where the DCI includes the first indication field.

Optionally, the determining, by the network device, the frequency-domain resource allocation granularity corresponding to each carrier in the at least one carrier includes:

determining, by the network device, the frequency-domain resource allocation granularity corresponding to each carrier in the at least one carrier based on a number of physical resource blocks (PRBs) of a first bandwidth part (BWP) on the at least one carrier; or,

determining, by the network device, the frequency-domain resource allocation granularity corresponding to each carrier in the at least one carrier based on a candidate frequency-domain resource allocation granularity set.

Optionally, after determining the frequency-domain resource allocation granularity corresponding to each carrier in the at least one carrier, the method further includes:

sending, by the network device, a higher-layer parameter to the terminal, where the higher-layer parameter carries the frequency-domain resource allocation granularity, where the frequency-domain resource allocation granularity carried in the higher-layer parameter is a frequency-domain resource allocation granularity jointly configured for the at least one carrier; or, the frequency-domain resource allocation granularity carried in the higher-layer parameter is a frequency-domain resource allocation granularity configured separately for each carrier in the at least one carrier.

Optionally, after determining the frequency-domain resource allocation granularity corresponding to each carrier in the at least one carrier, the method further includes:

in a case that the frequency-domain resource allocation granularity determined by the network device belongs to the candidate frequency-domain resource allocation granularity set, sending, by the network device, a higher-layer parameter to the terminal, where the higher-layer parameter carries the frequency-domain resource allocation granularity; or,

in a case that the frequency-domain resource allocation granularity determined by the network device does not belong to the candidate frequency-domain resource allocation granularity set, not sending, by the network device, a higher-layer parameter, or sending, by the network device, a higher-layer parameter to the terminal, where the higher-layer parameter does not carry the frequency-domain resource allocation granularity.

An embodiment of the present disclosure provides an information processing apparatus, including: a memory, a transceiver and a processor, where the memory is configured to store a computer program; the transceiver is configured to receive and transmit data under the control of the processor; and the processor is configured to read the computer program from the memory to perform the following operations:

receiving downlink control information (DCI) sent by a network device, where the DCI includes a first indication field for indicating frequency-domain resource allocation of at least one carrier;

determining a frequency-domain resource allocation granularity corresponding to each carrier in the at least one carrier; and

determining a quantity of bits corresponding to each carrier in the first indication field based on the frequency-domain resource allocation granularity corresponding to each carrier.

Optionally, the processor is further configured to read the computer program from the memory to perform the following operations:

determining the frequency-domain resource allocation granularity corresponding to each carrier in the at least one carrier based on a number of physical resource blocks (PRBs) of a first bandwidth part (BWP) on the at least one carrier; or,

determining the frequency-domain resource allocation granularity corresponding to each carrier in the at least one carrier based on higher-layer parameter configuration by the network device or agreement by a protocol.

Optionally, the processor is further configured to read the computer program from the memory to perform the following operations:

determining a total number of PRBs of a first BWP on at least one schedulable carrier configured by the DCI;

determining a first frequency-domain resource allocation granularity corresponding to the total number of PRBs of the first BWP based on a mapping relationship between different PRB numerical ranges and frequency-domain resource allocation granularities, where a maximum value in the PRB numerical ranges is a maximum total number of PRBs configurable for the at least one schedulable carrier configured by the DCI; and

determining the first frequency-domain resource allocation granularity as the frequency-domain resource allocation granularity corresponding to each carrier in the at least one carrier.

Optionally, a maximum value of the frequency-domain resource allocation granularities in the mapping relationship is greater than 16.

Optionally, the processor is further configured to read the computer program from the memory to perform the following operations:

for each carrier in the at least one carrier, determining a number of PRBs of a first BWP on a first carrier, where the first carrier is any carrier of the at least one carrier;

determining a second frequency-domain resource allocation granularity corresponding to the number of the PRBs of the first BWP on the first carrier based on a mapping relationship between different PRB numerical ranges and frequency-domain resource allocation granularities, where a maximum value in the PRB numerical ranges is a maximum number of PRBs configurable for one carrier; and

determining the frequency-domain resource allocation granularity corresponding to the first carrier based on the second frequency-domain resource allocation granularity.

Optionally, the processor is further configured to read the computer program from the memory to perform the following operations:

determining a product of the second frequency-domain resource allocation granularity and a preset value as the frequency-domain resource allocation granularity corresponding to the first carrier,

where the frequency-domain resource allocation granularity in the mapping relationship satisfies: $P = 2^n$, where $P$ is the frequency-domain resource allocation granularity, $1 \leq n \leq N$ and $N \geq 4$; the preset value is $2^m$ or $A$, $m \geq 0$, $A \geq 1$, and $n$, $N$, $m$ and $A$ are integers.

Optionally, the frequency-domain resource allocation granularity in the mapping relationship satisfies: $P = B * 2^n$, where $P$ is the frequency-domain resource allocation granularity, $1 \leq n \leq N$, $N \geq 4$, $B \geq 1$, and $n$, $B$, $N$ are integers.

Optionally, where the first BWP is an activated BWP on a carrier in an activated state; and/or, the first BWP is a preset BWP on a carrier in a deactivated state or on a carrier without any activated BWP. The preset BWP is one of the following:

a BWP with a smallest BWP index;
a BWP with a largest BWP index;
a BWP with a largest number of PRBs;
a BWP with a smallest number of PRBs; or,
a BWP indicated in the DCI.

Optionally, the processor is further configured to read the computer program from the memory to perform the following operations:

receiving a higher-layer parameter sent by the network device, and determining the frequency-domain resource allocation granularity corresponding to each carrier in the at least one carrier based on a frequency-domain resource allocation granularity carried in the higher-layer parameter; and/or,

determining the frequency-domain resource allocation granularity corresponding to each carrier in the at least one carrier based on a preset frequency-domain resource allocation granularity, where the preset frequency-domain resource allocation granularity is configured by the network device or agreed upon by the protocol.

Optionally, the frequency-domain resource allocation granularity carried in the higher-layer parameter is a frequency-domain resource allocation granularity jointly configured for the at least one carrier; or, the frequency-domain resource allocation granularity carried in the higher-layer parameter is a frequency-domain resource allocation granularity configured separately for each carrier in the at least one carrier.

Optionally, a resource allocation type corresponding to the at least one carrier includes: a first resource allocation type and/or a second resource allocation type, where a bit map is used in the first indication field to indicate frequency-domain resource allocation of a carrier of a first resource allocation type, and/or a resource indication value (RIV) is used in the first indication field to indicate frequency-domain resource allocation of a carrier of a second resource allocation type;

the processor is further configured to read the computer program from the memory to perform the following operations:

determining a frequency-domain resource allocation granularity corresponding to each carrier of the first resource allocation type based on a number of PRBs of a first BWP on the at least one carrier; or,

determining a frequency-domain resource allocation granularity corresponding to each carrier of the first resource allocation type or the second resource allocation type based on higher-layer parameter configuration by the network device or agreement by a protocol.

Optionally, the processor is further configured to read the computer program from the memory to perform the following operations:

determining a number of resource block groups (RBGs) corresponding to a first BWP on each carrier based on the frequency-domain resource allocation granularity corresponding to each carrier and a number of PRBs of the first BWP on each carrier;

determining a number of bits occupied by each carrier in the first indication field based on the number of the RBGs corresponding to the first BWP on each carrier; and

determining the bit position corresponding to each carrier in the first indication field according to the number of the bits occupied by each carrier in the first indication field, and a predetermined order of the at least one carrier.

Optionally, the number of the RBGs corresponding to the first BWP on each carrier is determined by the following formula: $N_{RBG}^{CCi} = \left\lceil \left( N_{BWP,k}^{size,CCi} + \left( N_{BWP,k}^{start,CCi} \bmod P \right) \right) / P \right\rceil$ , where $N_{RBG}^{CCi}$ is a number of RBGs corresponding to the first BWP on an i-th carrier in the at least one carrier, $N_{BWP,k}^{size,CCi}$ is a number of PRBs of the first BWP on the i-th carrier, $N_{BWP,k}^{start,CCi}$ is an index of a starting PRB of the first BWP on the i-th carrier, and P is the frequency-domain resource allocation granularity.

Optionally, the processor is further configured to read the computer program from the memory to perform the following operations:

for each carrier, determining the number of the RBGs as the number of the bits occupied by the carrier in the first indication field; or,

for each carrier, determining the number of bits occupied by the carrier in the first indication field by using a formula $L_{cci} = \log_2 \left( N_{RBG}^{CCi} (N_{RBG}^{CCi} + 1)/2 \right)$ , where $L_{cci}$ is a number of bits occupied by an i-th carrier in the first indication field, and $N_{RBG}^{CCi}$ is a number of RBGs corresponding to the i-th carrier.

Optionally, the predetermined order is one of the following:

cell indexes of cells correspond to indexes of all carriers in ascending order; or

cell indexes of cells correspond to indexes of all carriers in descending order.

An embodiment of the present disclosure provides a terminal, including:

a receiving unit, configured to receive downlink control information (DCI) sent by a network device, where the DCI includes a first indication field for indicating frequency-domain resource allocation of at least one carrier;

a first determining unit, configured to determine a frequency-domain resource allocation granularity corresponding to each carrier in the at least one carrier; and

a second determining unit, configured to determine a quantity of bits corresponding to each carrier in the first indication field based on the frequency-domain resource allocation granularity corresponding to each carrier.

An embodiment of the present disclosure provides an information processing method, including: a memory, a transceiver and a processor, where the memory is configured to store a computer program; the transceiver is configured to receive and transmit data under the control of the processor; and the processor is configured to read the computer program from the memory to perform the following operations:

determining a frequency-domain resource allocation granularity corresponding to each carrier in at least one carrier;

generating a first indication field based on the frequency-domain resource allocation granularity corresponding to each carrier, where the first indication field is used to indicate frequency-domain resource allocation of the at least one carrier; and

sending downlink control information (DCI) to a terminal, where the DCI includes the first indication field.

Optionally, the processor is further configured to read the computer program from the memory to perform the following operations:

determining the frequency-domain resource allocation granularity corresponding to each carrier in the at least one carrier based on a number of physical resource blocks (PRBs) of a first bandwidth part (BWP) on the at least one carrier; or,

determining the frequency-domain resource allocation granularity corresponding to each carrier in the at least one carrier based on a candidate frequency-domain resource allocation granularity set.

Optionally, the processor is further configured to read the computer program from the memory to perform the following operations:

sending a higher-layer parameter to the terminal, where the higher-layer parameter carries the frequency-domain resource allocation granularity,

where the frequency-domain resource allocation granularity carried in the higher-layer parameter is a frequency-domain resource allocation granularity jointly configured for the at least one carrier; or, the frequency-domain resource allocation granularity carried in the higher-layer parameter is a frequency-domain resource allocation granularity configured separately for each carrier in the at least one carrier.

Optionally, the processor is configured to read the computer program from the memory to perform the following operations:

in a case that the frequency-domain resource allocation granularity determined belongs to the candidate frequency-domain resource allocation granularity set, sending a higher-layer parameter to the terminal, where the higher-layer parameter carries the frequency-domain resource allocation granularity; or,

in a case that the frequency-domain resource allocation granularity determined does not belong to the candidate frequency-domain resource allocation granularity set, not sending a higher-layer parameter, or sending a higher-layer parameter to the terminal, where the higher-layer parameter does not carry the frequency-domain resource allocation granularity.

An embodiment of the present disclosure provides a network device, including:

a determining unit, configured to determine a frequency-domain resource allocation granularity corresponding to each carrier in at least one carrier;

a generation unit, configured to generate a first indication field based on the frequency-domain resource allocation granularity corresponding to each carrier, where the first indication field is used to indicate frequency-domain resource allocation of the at least one carrier; and

a first sending unit, configured to send downlink control information (DCI) to a terminal, where the DCI includes the first indication field.

An embodiment of the present disclosure provides a processor-readable storage medium, where the processor-readable storage medium stores a computer program, and the computer program is configured to cause a processor to execute the steps of the information processing method on the side of a terminal, or the computer program is configured to cause a processor to execute the steps of the information processing method on the side of a network device.

The above technical solutions of the present disclosure have the following beneficial effects. In the embodiments of the present disclosure, after receiving a multi-carrier scheduling DCI from a network device, which includes a first indication field indicating frequency-domain resource allocation of at least one carrier, a terminal can further determine a quantity of bits corresponding to each carrier in the first indication field by obtaining the frequency-domain resource allocation granularity corresponding to each carrier in the at least one carrier. In this way, in a scenario of scheduling one or more carriers in one DCI, frequency-domain resource allocation of multiple carriers or actually scheduled carrier(s) is indicated through the first indication field, so as to solve a problem that there is currently no specific solution for how a DCI for multi-carrier scheduling indicates frequency-domain resource allocation of one or more carriers.

BRIEF DESCRIPTION OF THE DRAWINGS

FIG. 1 is a schematic diagram of multi-carrier scheduling according to an embodiment of the present disclosure;
FIG. 2 is a flow chart of an information processing method applied to a terminal according to an embodiment of the present disclosure;
FIG. 3 is a flow chart of an information processing method applied to a network device according to an embodiment of the present disclosure;

FIG. 4 is a schematic diagram of a first indication field according to an embodiment of the present disclosure;

FIG. 5 is a block diagram of an information processing apparatus applied to a terminal according to an embodiment of the present disclosure;

FIG. 6 is a block diagram of a terminal according to an embodiment of the present disclosure;

FIG. 7 is a block diagram of an information processing apparatus applied to a network device according to an embodiment of the present disclosure; and

FIG. 8 is a block diagram of a network device according to an embodiment of the present disclosure.

## DETAILED DESCRIPTION

In order to make a to-be-solved technical problem, a technical solution and advantages of the present disclosure clearer, a detailed description will be given below in conjunction with the accompanying drawings and specific embodiments. In the following description, specific details such as specific configurations and components are provided merely to assist in a comprehensive understanding of the embodiments of the present disclosure. Therefore, those skilled in the art should be appreciated that various changes and modifications may be made to the embodiments described herein without departing from the scope and spirit of the present disclosure. In addition, for clarity and conciseness, descriptions of known functions and constructions have been omitted.

It should be appreciated that "an embodiment" or "one embodiment" mentioned throughout the specification means that specific features, structures, or characteristics related to the embodiment are included in at least one embodiment of the present disclosure. Therefore, words "in an embodiment" or "in one embodiment" appearing throughout the entire specification may not necessarily refer to the same embodiment. In addition, these specific features, structures, or characteristics may be combined in one or more embodiments in any suitable manner.

In various embodiments of the present disclosure, it should be appreciated that the size of a sequence number of each of the following processes does not imply the order of execution, and the execution order of each process should be determined based on the function and internal logic of the each process, which should not constitute any limitations on the implementation process of the present disclosure.

In addition, terms "system" and "network" are often used interchangeably in the specification.

The technical solution according to embodiments of the present disclosure may be applied to various systems, particularly to a 5th generation mobile communication technology (5th Generation Mobile Communication Technology, 5G) system. For example, an applicable system may be a global system of mobile communication (global system of mobile communication, GSM) system, a code division multiple access (code division multiple access, CDMA) system, a wideband code division multiple access (Wideband Code Division Multiple Access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, and a 5G New Radio (New Radio, NR) system. Each of the various systems includes a terminal and a network device. The systems may further include a core network portion, such as an evolved packet system (Evolved Packet System, EPS), or a 5G system (5GS).

The network device and the terminal may each perform multi-input multi-output (MIMO) transmission with each other by using one or more antennas. The MIMO transmission may be single user MIMO (SU-MIMO) or multiple user MIMO (MU-MIMO). According to the configuration and quantity of antenna combinations, the MIMO transmission may be 2 dimensional-MIMO (2D-MIMO), 3 dimensional-MIMO (3D-MIMO), full dimensional-MIMO (FD-MIMO) or massive-MIMO (massive-MIMO), and may be diversity transmission, pre-coded transmission, beam forming transmission, or the like.

The term "and/or" in the embodiments of the present disclosure describes the association relationship of associated objects and indicates that there may be three types of relationships. For example, A and/or B may represent three situations including: A alone, both A and B, and B alone. The character "/" generally indicates that the associated objects are in an "or" relationship.

The term "multiple" used in the embodiments of the present disclosure refers to two or more, and other quantifiers are similar thereto.

In the following, technical solutions in embodiments of the present disclosure will be described in a clear and thorough manner with reference to the drawings in the embodiments of the present disclosure. Apparently, the described embodiments are merely a part of, rather than all of, the embodiments of the present disclosure. Based on the embodiments of the present disclosure, a person skilled in the art may, without creative effort, obtain other embodiments, all of which shall fall within the scope of the present disclosure.

The relevant technologies involved in the present disclosure will be introduced below.

For frequency domain resource allocation Type 0 (RA Type 0), a frequency-domain resource indication method may adopt a bitmap-based approach for indicating frequency domain resources. A frequency-domain resource allocation granularity P is determined based on a bandwidth of an activated bandwidth part (Bandwidth Part, BWP) and higher-layer parameter configuration, where P may take values from {2, 4, 8, 16}. For frequency domain resource allocation Type 1 (RA Type 1), a frequency-domain resource indication method may adopt an approach where an RIV indicates a starting PRB position and a PRB length for resource allocation, where P may take values from {1, 2, 4, 8, 16}.

The frequency-domain resource allocation granularity P and the number of bits required for the RA Type0 are determined as follows.

In a first step, a size P of each resource block group (Resource Block Group, RBG) is determined based on a bandwidth of a BWP and a parameter rbg-size configured by a higher layer by using Table 1.

Table 1

| BWP Size | scheduling granularity configuration 1 | scheduling granularity configuration 2 |
|---|---|---|
| 1~36 | 2 | 4 |
| 37~72 | 4 | 8 |
| 73~44 | 8 | 16 |
| 145~275 | 16 | 16 |

The RBG size P represents the frequency-domain resource allocation granularity; the parameter rbg-size is used to indicate configuration 1 or configuration 2 for scheduling granularity.

In a second step, the number of RBGs in a BWP is defined as $N_{RBG}$, and is calculated by a formula:

$$N_{RBG} = \left\lceil \left( N_{BWP,i}^{size} + \left( N_{BWP,i}^{start} \bmod P \right) \right) / P \right\rceil$$, where $N_{BWP,i}^{size}$ is a number of PRBs occupied by an activated BWPi; $N_{BWP,i}^{start}$ is an index of a starting PRB of the activated BWPi.

In a third step, a frequency domain resource allocation (Frequency domain resource allocation, FDRA) field is indicated through a bitmap. A length of the bitmap is $N_{RBG}$, with each bit indicating one RBG. RBGs are numbered in ascending frequency domain order, and RBGs numbered as $RBG_0$ to $RBG_{N_{RBG}-1}$ are mapped from the highest bit to the lowest bit of the bitmap. The RA Type0 requires a maximum of 18 bits for information.

The frequency-domain resource allocation granularity P and the number of bits required for the RA Type1 based on RBG are determined as follows.

In a first step, the RBG size P is configured though a parameter resourceAllocationType1GranularityDCI-1-2 configured by a higher layer, which may take values from {1, 2, 4, 8, 16}.

In a second step, definition of resource indicator value (Resource indicator value, RIV) is determined according to the following formula, where $N_{RBG}$ represents a number of consecutive RBGs in a BWP, $L_{RBGs}$ represents a number of scheduled consecutive RBGs, and $RBG_{start}$ represents a starting position of a scheduled RBG:

if $\left( L_{RBGs} - 1 \right) \leq \left\lfloor \frac{N_{RBG}}{2} \right\rfloor$, then RIV = $N_{RBG}$ ($L_{RBGs}$ - 1) + $RBG_{start}$;

otherwise, RIV = $N_{RBG}$ ($N_{RBG}$ - $L_{RBGs}$ - 1) + ($N_{RBG}$ - 1 + $RBG_{start}$),

where $L_{RBGs} \geq 1$, and $L_{RBGs}$ shall not exceed $N_{RBG}$ - $RBG_{start}$.

In a third step, the FDRA field indicates a starting RBG position and the number of consecutive RBGs for scheduling information through RIV. The length of the bit field is $\lceil \log_2(N_{RBG}(N_{RBG} + 1)/2) \rceil$ bits. The RA Type1 requires a maximum of 16 bits for information.

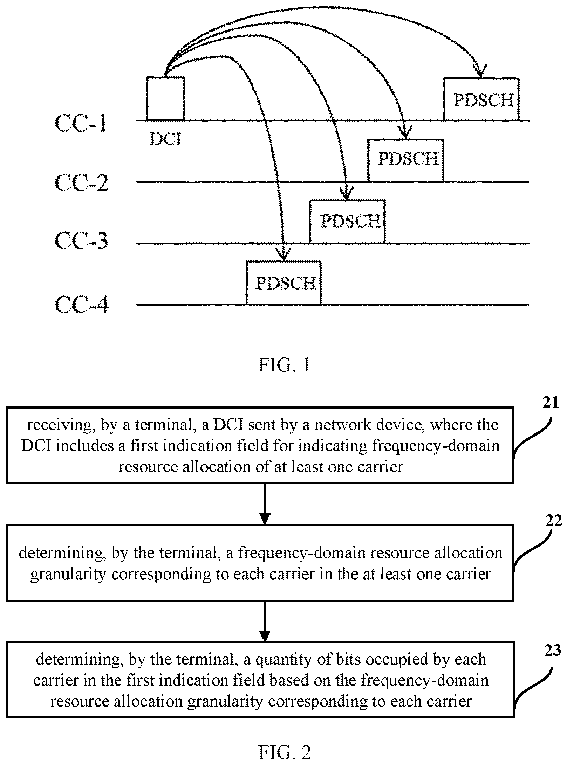

In a technical solution considering the introduction of using a single DCI to schedule PDSCH or PUSCH across multiple carriers, such as a multi-carrier scheduling DCI simultaneously scheduling PDSCH on four component carriers (Component Carriers, CCs) as shown in FIG. 1, the multi-carrier scheduling DCI schedules PDSCHs on CC-1, CC-2, CC-3, and CC-4 simultaneously.

Frequency-domain resource allocation of PDSCH or PUSCH on multiple scheduled carriers is indicated through an indication field in the multi-carrier scheduling DCI, such as a frequency domain resource allocation (Frequency domain resource allocation, FDRA) field. Each carrier corresponds to one piece of frequency-domain resource indication information, supporting up to four scheduled carriers. Since a maximum DCI size in multi-carrier scheduling is 164 bits, assigning independent frequency-domain resource indications for each carrier would require a significant number of bits for the indication field.

Based on the above content, the determining the RBG size P in the first step is a key step in bit compression in the FDRA field. By determining the size P of each RBG, the number of RBGs included in the BWP is determined, and ultimately the number of bits required for the FDRA is determined. In the RA type0, the RBG size P may take values from {2, 4, 8, 16}, and a maximum of 18 bits are required for indication for a BWP including 275 physical resource blocks (Physical Resource Blocks, PRBs). However, multi-carrier scheduling DCI requires data across up to 4 BWPs. If the RBG size P is determined independently for each carrier using the above method, the FDRA field in the multi-carrier scheduling DCI would require an excessively large number of bits, up to 4*18bit=72bit, making it difficult for the multi-carrier scheduling DCI to meet the 164-bit limit for the DCI size. Since in the multi-carrier scheduling DCI research, the DCI size is constrained by a total length limit of 164 bits, the present disclosure further considers bit compression schemes when designing the indication field of the multi-carrier scheduling DCI, to reduce the bit overhead of the indication field of the DCI.

An embodiment of the present disclosure provides an information processing method and apparatus, a terminal, and a network device to solve a problem that there is currently no specific solution for how a DCI for multi-carrier scheduling indicates frequency-domain resource allocation of one or more carriers. The method and the apparatus (or the terminal or the network device) are based on the same application concept. Since principles for solving problems by the method and apparatus (or the terminal or the network device) are similar to each other, implementations of the method and the apparatus (or the terminal or the network device) may refer to each other, and the repetition will not be described.

As shown in FIG. 2, an embodiment of the present disclosure provides an information processing method, which specifically includes the following steps.

Step 21: receiving, by a terminal, a DCI sent by a network device, where the DCI includes a first indication field for indicating frequency-domain resource allocation of at least one carrier.

Optionally, one DCI may be configured to schedule one or more (i.e., at least two) carriers, meaning that one DCI may be configured to schedule at least one carrier. For example, one DCI may be configured to schedule one carrier, or may also be configured to schedule multiple (i.e., at least two) carriers. A first type of DCI may be configured to schedule one carrier, and a second type of DCI may be configured to schedule at least one carrier, etc., which is not limited in the embodiment of the present disclosure.

Specifically, the first indication field included in the DCI may indicate frequency-domain resource allocation of at least one carrier. For example, the first indication field may indicate frequency-domain resource allocation of each carrier in at least one schedulable carrier configured by the DCI. For example, if the DCI is configured to schedule one carrier, the first indication field indicates frequency-domain resource allocation of the one carrier; or, if the DCI is configured for four schedulable carriers, the first indication field indicates frequency-domain resource allocation of these four carriers (where if the DCI actually schedules 1, 2, or 3 carriers, content indicated by corresponding unscheduled carriers in the first indication field may be empty, etc.). For example, the first indication field may indicate frequency-domain resource allocation of carriers actually scheduled by the DCI. For example, if the DCI is configured for four schedulable carriers (including CC-1, CC-2, CC-3, CC-4), and the actually scheduled carriers are CC-1 and CC-3, then the first indication field may indicate frequency-domain resource allocation of CC-1 and CC-3 (where the network device may also indicate the actually scheduled carriers separately, such as the DCI may also include indication information for indicating the actually scheduled carriers).

Optionally, the first indication field may be an FDRA field, or the first indication field may also be other indication fields, etc., and an embodiment of the present disclosure is not limited to this.

Step 22: determining, by the terminal, a frequency-domain resource allocation granularity corresponding to each carrier in the at least one carrier.

Optionally, the terminal may determine the frequency-domain resource allocation granularity corresponding to each carrier in the at least one carrier indicated by the first indication field according to a predetermined rule; or, the terminal may determine the frequency-domain resource allocation granularity corresponding to each carrier in the at least one carrier indicated by the first indication field based on higher-layer parameter configuration by the network device or agreement by a protocol. The frequency-domain resource allocation granularity corresponding to each carrier in the at least one carrier may be jointly determined or independently determined, that is, frequency-domain resource allocation granularities of different carriers among the at least one carrier may be the same or different.

Step 23: determining, by the terminal, a quantity of bits corresponding to each carrier in the first indication field based on the frequency-domain resource allocation granularity corresponding to each carrier.

Specifically, after determining the frequency-domain resource allocation granularity corresponding to each carrier in the at least one carrier, the terminal may determine which bit or bits in the first indication field each carrier corresponds to, based on the frequency-domain resource allocation granularity. For example, the first indication field indicates frequency-domain resource allocation of two carriers (including CC-1 and CC-2), which includes 8 bits. The terminal determines that CC-1 corresponds to 4 most significant bits and CC-2 corresponds to 4 least significant bits, based on the frequency-domain resource allocation granularities corresponding to the two carriers (assuming the order of the two carriers is known).

Alternatively, in other words, the first indication field may include multiple indication sub-fields, and the terminal may determine indication sub-fields in the first indication field corresponding to multiple carriers based on the frequency-domain resource allocation granularity. For example, the first indication field indicates frequency-domain resource allocation of two carriers (including CC-1 and CC-2), and the first information indication field includes two indication sub-fields. The terminal may determine that CC-1 corresponding to a first indication sub-field and CC-2 corresponding to a second indication sub-field based on the frequency-domain resource allocation granularity of the two carriers (assuming the order of the two carriers is already known).

Alternatively, in other words, the first indication field may be referred to as an indication field group, and the indication field group includes multiple indication fields. The terminal may determine which indication field each carrier in the indication field group corresponds to based on the frequency-domain resource allocation granularity. For example, a first indication field (i.e., the indication field group) indicates frequency-domain resource allocation for two carriers (including CC-1 and CC-2), and the indication field group includes two indication fields. The terminal determines that CC-1 corresponds to a first indication sub-field and CC-2 corresponding to a second indication sub-field based on the frequency-domain resource allocation granularity of the two carriers (assuming the order of the two carriers is already known). An embodiment of the present disclosure is not limited to this.

It should be noted that when the first indication field indicates frequency-domain resource allocation of one carrier, all bits contained in the first indication field may be bits corresponding to this carrier, and the terminal may directly determine all bits in the first indication field as the bits corresponding to this carrier; Alternatively, the first indication field may contain other bits in addition to the bit corresponding to this carrier, and the terminal may determine the bit occupied by this carrier in the first indication field based on frequency-domain resource allocation granularity corresponding to this carrier. An embodiment of the present disclosure is not limited to this.

In the above scheme, after receiving a multi-carrier scheduling DCI from the network device, which includes a first indication field for indicating frequency-domain resource allocation of at least one carrier, the terminal can further determine a quantity of bits corresponding to each carrier in the first indication field by obtaining the frequency-domain resource allocation granularity corresponding to each carrier in the at least one carrier. In this way, in a scenario of scheduling one or more carriers in one DCI, frequency-domain resource allocation of multiple carriers or actually scheduled carrier(s) is indicated through the first indication field, so as to solve a problem that there is currently no specific solution for how a DCI for multi-carrier scheduling indicates frequency-domain resource allocation of one or more carriers.

Optionally, the determining, by the terminal, the frequency-domain resource allocation granularity corresponding to each carrier in the at least one carrier includes:

manner 1: determining, by the terminal, the frequency-domain resource allocation granularity corresponding to each carrier in the at least one carrier based on a number of PRBs of a first BWP on the at least one carrier; or,

manner 2: determining, by the terminal, the frequency-domain resource allocation granularity corresponding to each carrier in the at least one carrier based on higher-layer parameter configuration by the network device or agreement by a protocol.

Specifically, when obtaining the frequency-domain resource allocation granularity corresponding to each carrier in the at least one carrier, the terminal may adopt different strategies to determine frequency-domain resource allocation granularities of corresponding carriers based on different resource allocation types corresponding to the carriers.

Optionally, the resource allocation type may include, but not limited to: at least one of a first resource allocation type, a second resource allocation type, and other resource allocation types, etc. For example, the resource allocation type corresponding to the at least one carrier includes: the first resource allocation type and/or the second resource allocation type, which is not limited in the embodiment of the present disclosure. A bit map is used in the first indication field to indicate frequency-domain resource allocation of a carrier of a first resource allocation type, and/or a resource indication value (RIV) is used in the first indication field to indicate frequency-domain resource allocation of a carrier of a second resource allocation type. For example, the first resource allocation type may also be referred to as RA Type0, meaning that a bit map is used in the first indication field for frequency-domain resource indication for a carrier of the first resource allocation type; the second resource allocation type may also be referred to as RA Type1, meaning that the RIV is used in the first indication field for frequency-domain resource indication for a carrier of the second resource allocation type (e.g., the RIV may be used to indicate a position of a starting RBG and a number of consecutive RBGs).

Furthermore, the determining, by the terminal, the frequency-domain resource allocation granularity corresponding to each carrier in the at least one carrier includes:

determining, by the terminal, a frequency-domain resource allocation granularity corresponding to each carrier of the first resource allocation type based on a number of PRBs of a first BWP on the at least one carrier; or,
determining, by the terminal, a frequency-domain resource allocation granularity corresponding to each carrier of the first resource allocation type or the second resource allocation type based on higher-layer parameter configuration by the network device or agreement by a protocol.

Specifically, for a carrier of the first resource allocation type in the at least one carrier, the terminal determines the frequency-domain resource allocation granularity corresponding to each carrier of the first resource allocation type based on the number of PRBs of the first BWP on the at least one carrier (where the number of PRBs of the first BWP on the at least one carrier may be a total number of PRBs of first BWPs on all carriers that can be scheduled by the DCI, or the number of PRBs of the first BWP on each carrier of the first resource allocation type, etc., as described in the following embodiments). Alternatively, the terminal determines the frequency-domain resource allocation granularity corresponding to each carrier of the first resource allocation type based on higher-layer parameter configuration by the network device or agreement by the protocol. Optionally, for a carrier of the second resource allocation type in the at least one carrier, the terminal determines the frequency-domain resource allocation granularity corresponding to each carrier of the second resource allocation type based on higher-layer parameter configuration by the network device or agreement by the protocol.

For example, if each carrier in the at least one carrier (which may be carrier(s) actually scheduled by the DCI or multiple carriers corresponding to the DCI) is a carrier of the first resource allocation type, the frequency-domain resource allocation granularity of each carrier may be determined according to the above first manner or second manner (optionally, the specific manner may be agreed upon by the protocol or configured by the network device side, etc., and an embodiment of the present disclosure is not limited to this).

For another example, if each carrier in the at least one carrier (which may be carrier(s) actually scheduled by the DCI or multiple carriers corresponding to the DCI) is a carrier of the second resource allocation type, the frequency-domain resource allocation granularity of each carrier may be determined according to the above second manner.

For another example, if the at least one carrier (which may be carrier(s) actually scheduled by the DCI or multiple carriers corresponding to the DCI) includes both the carrier of the first resource allocation type and the carrier of the second resource allocation type, for the carrier of the first resource allocation type, frequency-domain resource allocation granularity of each carrier may be determined according to the above first manner or second manner (optionally, the specific manner may be determined by protocol agreement or network device configuration, etc., and an embodiment of the present disclosure is not limited to this); and for the carrier of the second resource allocation type, the frequency-domain resource allocation granularity for each carrier may be determined according to the above second manner.

Optionally, as an implementation, the determining, by the terminal, the frequency-domain resource allocation granularity corresponding to each carrier in the at least one carrier based on the number of PRBs of the first BWP on the at least one carrier includes:

determining, by the terminal, a total number of PRBs of the first BWP on at least one schedulable carrier configured by the DCI;

determining, by the terminal, a first frequency-domain resource allocation granularity corresponding to the total number of PRBs of the first BWP based on a mapping relationship between different PRB numerical ranges (short for PRB numerical range) and frequency-domain resource allocation granularities, where a maximum value in the PRB numerical ranges is a maximum total number of PRBs configured for at least one schedulable carrier configured by the DCI; and

determining, by the terminal, the first frequency-domain resource allocation granularity as the frequency-domain resource allocation granularity corresponding to each carrier in the at least one carrier.

Specifically, the total number of PRBs may be a total number of PRBs of all first BWPs on all schedulable carriers configured by the DCI based on configuration. For example, if a DCI is configured to schedule 4 carriers (the DCI may actually schedule 4 carriers or less than 4 carriers, etc.), all the schedulable carriers configured by the DCI are these 4 carriers, and the total number of PRBs is a total number of PRBs of all first BWPs on these 4 carriers. Furthermore, the terminal determines a first PRB numerical range where the total number of PRBs is located, based on the mapping relationship between the numerical range of different PRBs and the frequency-domain resource allocation granularities. Therefore, a frequency-domain resource allocation granularity corresponding to the first PRB numerical range (i.e., the first frequency-domain resource allocation granularity) is determined as the frequency-domain resource allocation granularity corresponding to each carrier.

Optionally, the first BWP is an activated BWP on a carrier in an activated state; and/or, the first BWP is a preset BWP on a carrier that is in a deactivated state or on a carrier that has not activated BWP.

That is to say, for a carrier in an activated state among the at least one carrier, the first BWP is an activated BWP; and/or, for a carrier that is in a deactivated state or on a carrier that has not activated BWP among the at least one carrier, the first BWP is a preset BWP. The preset BWP is one of the following:

a BWP with a smallest BWP index;

a BWP with a largest BWP index;
a BWP with a largest number of PRBs;
a BWP with a smallest number of PRBs; or,
a BWP indicated in the DCI.

It should be noted that an effective time of frequency-domain resource allocation for a carrier in a deactivated state or a carrier having not activated BWP is the same as an effective time of carrier deactivation.

For example, in a case that each of the at least one schedulable carrier configured by DCI is a carrier in an activated state, the total number of PRBs of all the first BWPs is a sum of the number of PRBs of activated BWPs on each carrier in the at least one schedulable carrier configured by DCI.

For example, in a case that each of the at least one schedulable carrier configured by DCI is a carrier in a deactivated state or a carrier having not activated BWP, the total number of PRBs of all the first BWPs is the sum of the number of PRBs of the preset BWPs on each carrier in the at least one schedulable carrier configured by DCI.

For example, in a case that the at least one schedulable carrier configured by DCI includes both the carrier in an activated state, and the carrier in a deactivated state and/or the carrier having not activated BWP, the total number of PRBs of all the first BWPs is the sum of the total number of PRBs of activated BWPs on carriers in an activated state (i.e., the sum of the numbers of PRBs of the activated BWPs on each activated carrier), and the total number of PRBs of the preset BWPs on all carriers in the deactivated state and/or carriers without the activated BWP (i.e., the sum of the numbers of PRBs of the preset BWPs on carriers in the deactivated state and/or carriers without the activated BWP).

Specifically, the total number of PRBs of all the first BWPs on the at least one schedulable carrier configured by the DCI is determined by the following formula: $N_{BWP}^{size,total} = \sum N_{BWP}^{size,CCi}$ , where $N_{BWP}^{size,total}$ is the total number of PRBs of the first BWP(s) on the at least one schedulable carrier configured by the DCI, and $N_{BWP}^{size,CCi}$ is the number of PRBs of the first BWP(s) on the i-th carrier among the at least one schedulable carrier configured by the DCI.

Optionally, a maximum value of the frequency-domain resource allocation granularities in the mapping relationship is greater than 16.

For example, for multi-carrier scheduling DCI, a determination table of RBG size P (i.e., the frequency-domain resource allocation granularity) may be defined, where the table includes the mapping relationship between multiple different PRB numerical ranges and frequency-domain resource allocation granularities. The maximum value in the PRB numerical range is a maximum total number of PRBs configurable for the at least one schedulable carrier configured by DCI. For example, the maximum value in the PRB numerical range is defined as $N_{BWP}^{max,total}$ , then $N_{BWP}^{max,total} = 275 * N_{cc}$ , where $N_{cc}$ is a maximum number of scheduling carriers supported by the multi-carrier scheduling DCI. If the protocol stipulates that the multi-carrier scheduling DCI supports scheduling up to 4 carriers, then the number of PRBs is $N_{BWP}^{max,total} = 275 * 4 = 1100$ . In this table, 1100 PRBs may be divided into multiple segments, resulting in multiple PRB numerical ranges. Additionally, this table may include at least one set of RBG size P configurations, and each PRB numerical range corresponding to one RBG size P value in one set of RBG size P configurations.

The maximum value of the RBG size P is $P_{max}$, $P_{max} > 16$, and $P_{max}$ is an integer (here $P_{max}$ may take a value of $2^n$ or may take an integer of non $2^n$, etc., and the embodiments of the present disclosure are not limited thereto). If $P_{max} = 32$, then the maximum value of the RBG size P is 32 PRBs; and if $P_{max} = 64$, then the maximum value of the RBG size P is 64 PRBs. In the table, each bandwidth (i.e., each PRB numerical range) from 1 to $N_{BWP}^{max,total}$ corresponds to one RBG size P value in a set of RBG size P configurations, where different first PRB numerical ranges may correspond to the same RBG size P value or different RBG size P values. In this way, by extending the RBG size P, a length of the first indication field during multi-carrier scheduling may be further compressed, which is beneficial for reducing signaling overhead.

Optionally, as another implementation, the determining, by the terminal, the frequency-domain resource allocation granularity corresponding to each carrier in the at least one carrier based on the number of PRBs of the first BWP on the at least one carrier includes:

for each carrier in the at least one carrier, determining, by the terminal, a number of PRBs of the first BWP on a first carrier, where the first carrier is any carrier of the at least one carrier;
determining, by the terminal, a first frequency-domain resource allocation granularity corresponding to the number of PRBs of the first BWP on the first carrier based on a mapping relationship between different PRB numerical ranges and frequency-domain resource allocation granularities, where a maximum value in the PRB numerical ranges is a maximum total number of PRBs configured for at least one schedulable carrier configured by the DCI; and determining, by the terminal, the frequency-domain resource allocation granularity corresponding to the first carrier based on the second frequency-domain resource allocation granularity.

Specifically, the first carrier is any one of the at least one carrier, that is, the frequency-domain resource allocation granularity corresponding to each carrier in the at least one carrier may be determined separately by using the above embodiments. Furthermore, the terminal determines a second PRB numerical range where the number of PRBs of the first BWP on the first carrier is located, based on the mapping relationship between different PRB numerical ranges and frequency-domain resource allocation granularities. Therefore, a frequency-domain resource allocation granularity corresponding to the second PRB numerical range (i.e., the second frequency-domain resource allocation granularity) is determined as the frequency-domain resource allocation granularity of the first carrier.

Optionally, the first BWP is an activated BWP on a carrier in an activated state; and/or, the first BWP is a preset BWP on a carrier in a deactivated state or on a carrier without any activated BWP.

That is to say, for a carrier in an activated state among the at least one carrier, the first BWP is an activated BWP; and/or, for a carrier in a deactivated state or on a carrier without any activated BWP among the at least one carrier, the first BWP is a preset BWP. The preset BWP is one of the following:

a BWP with a smallest BWP index;
a BWP with a largest BWP index;
a BWP with a largest number of PRBs;
a BWP with a smallest number of PRBs; or,
a BWP indicated in the DCI.

It should be noted that the effective time of frequency-domain resource allocation for carriers that are in a deactivated state or carriers that have not activated BWP is the same as the effective time of carrier deactivation.

For example, in a case that each carrier in the at least one carrier (which may be carrier(s) actually scheduled by the DCI or multiple carriers corresponding to the DCI) is in an activated state, a corresponding frequency-domain resource allocation granularity is determined for each carrier based on the number of PRBs of the activated BWP.

For example, in a case that each carrier in the at least one carrier (which may be carrier(s) actually scheduled by the DCI or multiple carriers corresponding to the DCI) is a carrier in a deactivated state or a carrier without any activated BWP, a corresponding frequency-domain resource allocation granularity is determined for each carrier according to the number of the PRBs of the preset BWP.

For example, in a case that each carrier in the at least one carrier (which may be carrier(s) actually scheduled by the DCI or multiple carriers corresponding to the DCI) includes both the carrier in the activated state, and the carrier in the deactivated state and/or the carrier without any activated BWP, for each carrier in the activated state, a corresponding frequency-domain resource allocation granularity is determined based on the number of PRBs of the activate BWP; and for each carrier in the deactivated state and/or each carrier without any activated BWP, a corresponding frequency-domain resource allocation granularity is determined according to the number of PRBs of the preset BWP.

Optionally, as an implementation, the frequency-domain resource allocation granularity in the mapping relationship satisfies: $P = 2^n$, where P is the frequency-domain resource allocation granularity, $1 \leq n \leq N$ and $N \geq 4$; and the preset value is $2^m$ or A, $m \geq 0$, $A \geq 1$, and n, N, m and A are integers.

The determining, by the terminal, the frequency-domain resource allocation granularity corresponding to the first carrier based on the second frequency-domain resource allocation granularity includes: determining, by the terminal, a product of the second frequency-domain resource allocation granularity and a preset value as the frequency-domain resource allocation granularity corresponding to the first carrier.

Optionally, the preset values may be configured by the network device or agreed upon by the protocol.

For example, the mapping relationship may be a frequency-domain resource allocation granularity configuration table of a single carrier in related technologies, where the frequency-domain resource allocation granularity satisfies: $P = 2^n$, P is the frequency-domain resource allocation granularity, $1 \leq n \leq 4$, as shown in Table 1 above. Alternatively, the mapping relationship may be an enhanced table of frequency-domain resource allocation granularity configuration of a single carrier. The frequency-domain resource allocation granularity satisfies: $P = 2^n$, where P is the frequency-domain resource allocation granularity, $1 \leq n \leq N$, $N \geq 5$, meaning that the maximum value of P may be greater than 16. Furthermore, based on the frequency-domain resource allocation granularity configuration table of the single carrier in related technologies, or the enhanced table of frequency-domain resource allocation granularity configuration of the single carrier, the terminal determines the frequency-domain resource allocation granularity P by looking up the table, and further determines frequency-domain resource allocation granularity corresponding to each carrier through $2^m * P (m \geq 0)$, or $A* P$ ($A \geq 1$). By determining frequency-domain resource allocation granularity corresponding to each carrier by using the formulate $2^m * P (m \geq 0)$, or $A* P (A \geq 1)$, the RBG size P can be expanded to further compress the length of the first indication field during multi-carrier scheduling, which is beneficial for reducing signaling overhead.

Optionally, as another implementation, the frequency-domain resource allocation granularity in the mapping relationship satisfies: $P = B * 2^n$, where P is the frequency-domain resource allocation granularity, $1 \leq n \leq N$, $N \geq 4$, $B \geq 1$, and n, B, N are integers.

For example, the mapping relationship may be a new frequency-domain resource allocation granularity configuration table defined for a single carrier in multi-carrier scheduling, and the table includes a mapping relationship between multiple different second PRB numerical ranges and frequency-domain resource allocation granularities. A maximum value in the second PRB numerical ranges is a maximum number of PRBs that can be configured for one carrier. If the maximum number of PRBs configurable for one carrier is defined as 275, the 275 PRBs may be divided into multiple segments in this table, resulting in multiple second PRB numerical ranges. The table may also include at least one set of RBG size P (i.e., the frequency-domain resource allocation granularity) configurations, where each second PRB numerical range corresponds to one RBG size P value in one set of RBG size P configurations.

The maximum value of the RBG size P is $P_{max}$, $P_{max} > 16$, and $P_{max}$ is an integer is $P_{max}$. If $P_{max} = 32$, then the maximum value of the RBG size P is 32 PRBs; If $P_{max} = 64$, then the maximum value of the RBG size P is 64 PRBs. In the table, each bandwidth (i.e., each first PRB numerical range) from 1 to $N_{BWP}^{max,total}$ corresponds to one RBG size P value in a set of RBG size P configurations, where different first PRB numerical ranges may correspond to the same RBG size P value or different RBG size P values.

A value of the RBG size P is $P = B * 2^n$, $1 \leq n \leq N$, $N \geq 4$, $B \geq 1$, and n, B and N are integers; or a value of the RBG size P is $P = B * 2^n$, where $1 \leq N1 \leq n \leq N2$, where N1, n, N2 are positive integers. For example, if N1 = 1 and N2 = 5 then the RBG size P includes 2, 4, 8, 16, and 32 PRBs. For example, if N1 = 2 and N2 = 6, then the RBG size P includes 4, 8, 16, 32, and 64 PRBs, etc. An embodiment of the present disclosure is not limited to these. In this way, by extending the RBG size P, a length of the first indication field during multi-carrier scheduling may be further compressed, which is beneficial for reducing signaling overhead.

Optionally, the determining, by the terminal, the frequency-domain resource allocation granularity corresponding to each carrier in the at least one carrier based on the higher-layer parameter configuration by the network device or the agreement by the protocol includes:

receiving, by the terminal, a higher-layer parameter sent by the network device, and determining the frequency-domain resource allocation granularity corresponding to each carrier in the at least one carrier based on a frequency-domain resource allocation granularity carried in the higher-layer parameter; and/or,

determining the frequency-domain resource allocation granularity corresponding to each carrier in the at least one carrier based on a preset frequency-domain resource allocation granularity, where the preset frequency-domain resource allocation granularity is configured by the network device or agreed upon by the protocol. For example, in a case that the terminal does not receive the higher-layer parameter or the higher-layer parameter does not carry the frequency-domain resource allocation granularity, the terminal determines the frequency-domain resource allocation granularity corresponding to each carrier in the at least one carrier based on a preset frequency-domain resource allocation granularity. The preset frequency-domain resource allocation granularity is configured by the network device or agreed upon by the protocol.

For example, for at least one carrier (which may be a carrier actually scheduled by the DCI or multiple carriers corresponding to the DCI), the frequency-domain resource allocation granularity corresponding to each carrier is directly configured by the network device side. That is, the network device side indicates the frequency-domain resource allocation granularity corresponding to each carrier through the higher-layer parameter sent to the terminal. The maximum value of the frequency-domain resource allocation granularity that the network device can configure for each carrier is greater than 16. For example, the frequency-domain resource allocation granularity configured by the network device for each carrier may take values from {1,2,4,8,16,32...}. For example, the maximum value of the frequency-domain resource allocation granularity configured is 32 PRBs or 64 PRBs, which can expand the RBG size P to further compress the length of the first indication field during multi-carrier scheduling, thereby reducing signaling overhead. Of course, the frequency-domain resource allocation granularity in the embodiments of the present disclosure may also be other values, such as non-$2^n$ values, which is not limited by the embodiments of the present disclosure.

For example, for at least one carrier (which may be a carrier actually scheduled by the DCI or multiple carriers corresponding to the DCI), the frequency-domain resource allocation granularity corresponding to each carrier may be configured by the network device side, or based on the protocol agreement if not configured by the network device side. The maximum value of the frequency-domain resource allocation granularity configured by the network device for each carrier is greater than 16. For example, the frequency-domain resource allocation granularity configured by the network device for each carrier may be within a range of $2^n$, $1 \leq N1 < n \leq N2$. This may expand the RBG size P to further compress the length of the first indication field during multi-carrier scheduling, thereby reducing signaling overhead. If the network device side configures frequency-domain resource allocation granularity through a higher-layer parameter, the terminal determines a quantity of bits corresponding to each carrier in the first indication field based on the frequency-domain resource allocation granularity configured by the network device side. Otherwise, if the higher layer does not configure the frequency-domain resource allocation granularity (for example, a corresponding higher-layer parameter has not been received within a predetermined duration or before a predetermined time, or the frequency-domain resource allocation granularity is not indicated in the higher-layer parameter), the terminal determines a quantity of bits corresponding to each carrier in the first indication field according to a preset frequency-domain resource allocation granularity, such as the preset frequency-domain resource allocation granularity of $2^{N1}$, where N1 and N2 are defined by protocols.

Optionally, the frequency-domain resource allocation granularity carried in the higher-layer parameter is a frequency-domain resource allocation granularity jointly configured for the at least one carrier; or, the frequency-domain resource allocation granularity carried in the higher-layer parameter is a frequency-domain resource allocation granularity configured separately for each carrier in the at least one carrier.

Specifically, when the terminal configures the frequency-domain resource allocation granularity corresponding to each carrier through a higher-layer parameter in the higher-layer parameter, a value of the higher-layer parameter may be independently configured for each carrier, and may be the same or different from the value of the higher-layer parameter of resourceAllocationType1GranularityDCI-1-2.

Alternatively, the value of the higher-layer parameter may be configured jointly for the at least one carrier (which may be carriers actually scheduled by the DCI or multiple carriers corresponding to the DCI), that is, the at least one carrier corresponds to a same frequency-domain resource allocation granularity. Optionally, frequency-domain resource allocation granularities of multiple carrier groups may be configured through the higher-layer parameter, where one carrier group corresponds to at least two carriers, and one carrier group corresponds to one multi-carrier scheduling DCI. The values of the higher-layer parameter are independently configured for different carrier groups, and frequency-domain resource allocation granularities corresponding to different carrier groups may be the same or different.

Optionally, the determining, by the terminal, the quantity of bits corresponding to each carrier in the first indication field based on the frequency-domain resource allocation granularity corresponding to each carrier includes:

determining, by the terminal, a number of resource block groups (RBGs) corresponding to a first BWP on each carrier based on the frequency-domain resource allocation granularity corresponding to each carrier and a number of PRBs of the first BWP on each carrier;

determining, by the terminal, a number of bits occupied by each carrier in the first indication field based on the number of RBGs corresponding to the first BWP on each carrier; and

determining, by the terminal, the bit position corresponding to each carrier in the first indication field according to the number of bits occupied by each carrier in the first indication field, and a predetermined order of the at least one carrier.

For example, after determining the number of bits occupied by each carrier, the network device can generate the first indication field in the predetermined order of the at least one carrier. That is, bits in the first indication field are arranged in the predetermined order of the at least one carrier, so that the terminal can read frequency domain resource information for the at least one carrier from the first indication field in sequence according to the predetermined order.

Optionally, the predetermined order is one of the following:

cell indexes of cells correspond to indexes of all carriers in ascending order; or
cell indexes of cells correspond to indexes of all carriers in descending order.

It should be noted that the predetermined order in the embodiments of the present disclosure is not limited to this. For example, in a case that the network device side indicates at least one carrier actually scheduled for the DCI, the network device side may indicate the at least one carrier actually scheduled through the indication information, and the indication information may also indicate an order of the at least one carrier. In this way, the terminal may sequentially read the frequency-domain resource allocation for the at least one carrier in the first indication field according to the order of the at least one carrier indicated by the indication information.

Optionally, the number of RBGs corresponding to the first BWP on each carrier is determined by the following formula: $N_{RBG}^{CCi} = \left\lceil \left( N_{BWP,k}^{size,CCi} + \left( N_{BWP,k}^{start,CCi} \bmod P \right) \right) / P \right\rceil$, where $N_{RBG}^{CCi}$ is a number of RBGs corresponding to the first BWP on an i-th carrier in the at least one carrier, $N_{BWP,k}^{size,CCi}$ is a number of PRBs of the first BWP on the i-th carrier, $N_{BWP,k}^{start,CCi}$ is an index of a starting PRB of the first BWP on the i-th carrier, and P is the frequency-domain resource allocation granularity.

Optionally, the determining, by the terminal, the number of bits occupied by each carrier in the first indication field based on the number of RBGs corresponding to each carrier includes:

for each carrier, determining, by the terminal, the number of RBGs as the number of bits occupied by the carrier in the first indication field; or,

for each carrier, determining, by the terminal, the number of bits occupied by the carrier in the first indication field by using the formula $L_{cci} = \log_2\left(N_{RBG}^{CCi}(N_{RBG}^{CCi}+1)/2\right)$, where $L_{cci}$ is a number of bits occupied by an i-th carrier in the first indication field, and $N_{RBG}^{CCi}$ is a number of RBGs corresponding to the i-th carrier.

For example, in a case that the at least one carrier is a carrier of the first resource allocation type, the number of RBGs corresponding to the first BWP of each carrier is the number of bits occupied by the carrier in the first indication field, and the network device side may cascade bit maps of the RBGs corresponding to each carrier in a predetermined order to form the first indication field. In a case that the at least one carrier is a carrier of the second resource allocation type, the number of RBGs corresponding to the first BWP of each carrier is $L_{cci} = \log_2\left(N_{RBG}^{CCi}(N_{RBG}^{CCi}+1)/2\right)$ and the network device side may cascade RIVs corresponding to each carrier in a predetermined order to form the first indication field. In a case that the at least one carrier includes both the carrier of the first resource allocation type and the carrier of the second resource allocation type, the number of bits occupied by each of carriers of different classification types in the first indication field is determined separately, and the network device side cascades the bit map of the RBG corresponding to the carrier of the first resource allocation type and the RIV corresponding to the carrier of the second resource allocation type in the predetermined order to form the first indication field.

It should be noted that the frequency-domain resource indication manner by using the bitmap can be applied not only to frequency-domain resource allocation of the first resource allocation type, but also to frequency-domain resource allocation of other resource allocation types; the frequency-domain resource indication manner by using the RIV can be applied not only to frequency-domain resource allocation of the second resource allocation type, but also to frequency-domain resource allocation of other resource allocation types.

In the above schemes, when a terminal is scheduled by a multi-carrier scheduling DCI, a scheduling granularity RBG size P and an FDRA field of the multi-carrier scheduling DCI are determined according to the method of the embodiments of the present disclosure. In this way, frequency-domain resource allocation of multiple carriers or actually scheduled carriers are indicated through the first indication field, in a scenario of scheduling one or more carriers in one DCI, to solve a problem that there is currently no specific solution for how a DCI for multi-carrier scheduling indicates frequency-domain resource allocation of one or more carriers. In the embodiments of the present disclosure, a scheduling granularity of the DCI is designed to compress the total bit length required for the FDRA field, thereby reducing signaling overhead.

The terminal device involved in the embodiments of the present disclosure may be a device that provides voice and/or data connectivity to a user, a handheld device with a radio connection function, or other processing devices connected to a radio modem or the like. In different systems, the names of terminal may be different. For example, in a 5G system, a terminal may be referred to as user equipment (User Equipment, UE). A wireless terminal can communicate with one or more core networks (Core Network, CN) via a radio access network (Radio Access Network, RAN), and the wireless terminal may be a mobile terminal, such as a mobile phone (or referred to as "cellular" phone) and a computer with a mobile terminal, such as a portable, pocket-sized, hand-held, computer built-in or vehicle-mounted mobile apparatus, which exchange voice and/or data with the radio access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Personal Digital Assistant, PDA) and other devices. The wireless terminal may also be referred to as a system, subscriber unit (subscriber unit), subscriber station (subscriber station), mobile station (mobile station), mobile (mobile), remote station (remote station), access point (access point), remote terminal (remote terminal), access terminal (access terminal), user terminal (user terminal), user agent (user agent) and user device (user device), which are not limited in the embodiments of the present disclosure.

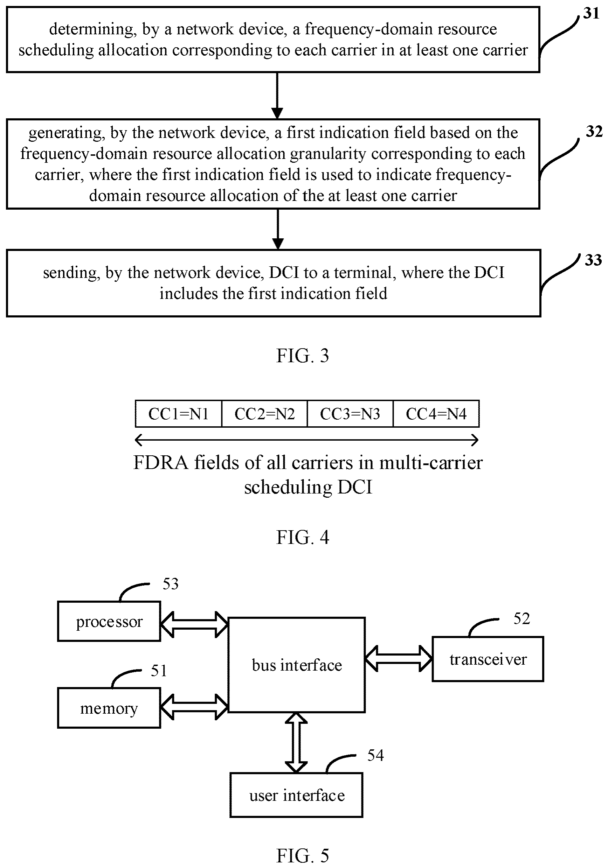

As shown in FIG. 3, an embodiment of the present disclosure provides an information processing method, including the following steps:

step 31: determining, by a network device, a frequency-domain resource allocation granularity corresponding to each carrier in at least one carrier;

step 32: generating, by the network device, a first indication field based on the frequency-domain resource allocation granularity corresponding to each carrier, where the first indication field is used to indicate frequency-domain resource allocation of the at least one carrier; and

step 33: sending, by the network device, DCI to a terminal, where the DCI includes the first indication field.

Optionally, one DCI may be configured to schedule one or more (i.e., at least two) carriers, meaning that one DCI may be configured to schedule at least one carrier. For example, one DCI may be configured to schedule one carrier, or may also be configured to schedule multiple (i.e., at least two) carriers. A first type of DCI may be configured to schedule one carrier, and a second type of DCI may be configured to schedule at least one carrier, etc., which is not limited in the embodiment of the present disclosure. Specifically, the first indication field included in the DCI may indicate frequency-domain resource allocation of at least one carrier among the multiple carriers. For example, the first indication field may indicate frequency-domain resource allocation of each carrier in the multiple carriers (i.e., the "at least one subcarrier" in step 31 may be at least one schedulable carrier configured by the DCI). For example, the first indication field may indicate frequency-domain resource allocation of an actually scheduled carrier among the multiple carriers (i.e., the "at least one subcarrier" in step 31 may be the carrier actually scheduled by the DCI).

Optionally, the first indication field may be an FDRA field, or the first indication field may also be other indication fields, etc., which is not limited in the embodiment of the present disclosure.

Optionally, the network device may determine the frequency-domain resource allocation granularity corresponding to each carrier in the at least one carrier indicated by the first indication field according to a predetermined rule, and correspondingly, the terminal side may also determine the frequency-domain resource allocation granularity corresponding to each carrier in the at least one carrier indicated by the first indication field according to the predetermined rule. Alternatively, the network device may determine the frequency-domain resource allocation granularity corresponding to each carrier in the at least one carrier indicated by the first indication field according to a predetermined rule; or the network device may select the frequency-domain resource allocation granularity corresponding to each carrier from candidate frequency-domain resource allocation granularities, and may configure the frequency-domain resource allocation granularity corresponding to each carrier determined by the network device to the terminal through a higher-layer parameter, so as to achieve alignment between the network device side and the terminal side.

Optionally, in the frequency-domain resource allocation granularity of the at least one carrier indicated by the first indication field, frequency-domain resource allocation granularities of different carriers may be the same or different.

In the above schemes, a network device determines frequency-domain resource allocation granularity corresponding to each carrier in at least one carrier, and generates a first indication field for indicating the frequency-domain resource allocation of the at least one carrier based on the frequency-domain resource allocation granularity corresponding to each carrier, and sends a DCI including the first indication field to a terminal. In this way, in a scenario of scheduling one or more carriers in one DCI, frequency-domain resource allocation of multiple carriers or actually scheduled carrier(s) is indicated through the first indication field, which solves a problem that there is currently no specific solution for how a DCI for multi-carrier scheduling indicates frequency-domain resource allocation of one or more carriers.

Optionally, the determining, by the network device, the frequency-domain resource allocation granularity corresponding to each carrier in the at least one carrier includes:

determining, by the network device, the frequency-domain resource allocation granularity corresponding to each carrier in the at least one carrier based on a number of physical resource blocks (PRBs) of a first bandwidth part (BWP) on the at least one carrier; or,

determining, by the network device, the frequency-domain resource allocation granularity corresponding to each carrier in the at least one carrier based on a candidate frequency-domain resource allocation granularity set.

Optionally, a maximum value of the frequency-domain resource allocation granularities in the candidate frequency-domain resource allocation granularity set is greater than 16, or the frequency-domain resource allocation granularity in the candidate frequency-domain resource allocation granularity set satisfies: $P = 2^n$, where $P$ is the frequency-domain resource allocation granularity, $1 \leq n \leq N, N \geq 5$; or the frequency-domain resource allocation granularity in the candidate frequency-domain resource allocation granularity set satisfies: $P = B * 2^n$, where $P$ is the frequency-domain resource allocation granularity, $1 \leq n \leq N, N \geq 4, B \geq 1$, and $n, B$ and $N$ are integers. In this way, the RBG size $P$ can be expanded to further compress the length of the first indication field during multi-carrier scheduling, which is beneficial for reducing signaling overhead.

Optionally, the determining, by the network device, the frequency-domain resource allocation granularity corresponding to each carrier in the at least one carrier based on the number of physical resource blocks (PRBs) of the first bandwidth part (BWP) on the at least one carrier includes:

determining, by the network device, a total number of PRBs of the first BWP on at least one schedulable carrier configured by the DCI;

determining, by the network device, a first frequency-domain resource allocation granularity corresponding to the total number of PRBs of the first BWP based on a mapping relationship between different PRB numerical ranges and frequency-domain resource allocation granularities, where a maximum value in the PRB numerical ranges is a maximum total number of PRBs configured for at least one schedulable carrier configured by the DCI; and determining, by the network device, the first frequency-domain resource allocation granularity as the frequency-domain resource allocation granularity corresponding to each carrier in the at least one carrier.

Optionally, the total number of PRBs of all the first BWPs on the at least one schedulable carrier configured by the DCI is determined by the following formula: $N_{BWP}^{size,total} = \sum N_{BWP}^{size,CCi}$, where $N_{BWP}^{size,total}$ is the total number of PRBs of the first BWP(s) on the at least one schedulable carrier configured by the DCI, and $N_{BWP}^{size,CCi}$ is the number of PRBs of the first BWP(s) on the i-th carrier among the at least one schedulable carrier configured by the DCI.

Optionally, a maximum value of the frequency-domain resource allocation granularities in the mapping relationship is greater than 16.

Optionally, the determining, by the network device, the frequency-domain resource allocation granularity corresponding to each carrier in the at least one carrier based on the number of PRBs of the first BWP on the at least one carrier includes:

for each carrier in the at least one carrier, determining, by the network device, a number of PRBs of the first BWP on a first carrier, where the first carrier is any carrier of the at least one carrier;

determining, by the network device, a second frequency-domain resource allocation granularity corresponding to the number of PRBs of the first BWP on the first carrier based on a mapping relationship between different PRB numerical ranges and frequency-domain resource allocation granularities, where a maximum value in the PRB numerical ranges is a maximum total number of PRBs configured for at least one schedulable carrier configured by the DCI; and

determining, by the network device, the frequency-domain resource allocation granularity corresponding to the first carrier based on the second frequency-domain resource allocation granularity.

Optionally, the determining, by the network device, the frequency-domain resource allocation granularity corresponding to the first carrier based on the second frequency-domain resource allocation granularity includes: determining, by the network device, a product of the second frequency-domain resource allocation granularity and a preset value as the frequency-domain resource allocation granularity corresponding to the first carrier.

The frequency-domain resource allocation granularity in the mapping relationship satisfies: $P = 2^n$, where P is the frequency-domain resource allocation granularity, $1 \leq n \leq N$ and $N \geq 4$; and the preset value is $2^m$ or A, $m \geq 0$, $A \geq 1$, and n, N, m and A are integers.

Optionally, the frequency-domain resource allocation granularity in the mapping relationship satisfies: $P = B * 2^n$, where P is the frequency-domain resource allocation granularity, $1 \leq n \leq N$, $N \geq 4$, $B \geq 1$, and n, B, N are integers.

Optionally, the first BWP is an activated BWP on a carrier in an activated state; and/or, the first BWP is a preset BWP on a carrier in a deactivated state or on a carrier without any activated BWP. The preset BWP is one of the following:

a BWP with a smallest BWP index;
a BWP with a largest BWP index;
a BWP with a largest number of PRBs;
a BWP with a smallest number of PRBs; or,
a BWP indicated in the DCI.

Optionally, after determining the frequency-domain resource allocation granularity corresponding to each carrier in the at least one carrier, the method further includes: sending, by the network device, a higher-layer parameter to the terminal, where the higher-layer parameter carries the frequency-domain resource allocation granularity, where the frequency-domain resource allocation granularity carried in the higher-layer parameter is a frequency-domain resource allocation granularity jointly configured for the at least one carrier; or, the frequency-domain resource allocation granularity carried in the higher-layer parameter is a frequency-domain resource allocation granularity configured separately for each carrier in the at least one carrier.

It should be noted that the premise for the network device to send a higher-layer parameter to the terminal may be that the network device determines the frequency-domain resource allocation granularity corresponding to each carrier in the at least one carrier based on the number of physical resource blocks (PRBs) of the first bandwidth part (BWP) on the at least one carrier; or, the network device may determine the frequency-domain resource allocation granularity corresponding to each carrier in the at least one carrier based on a set of candidate frequency-domain resource allocation granularities, which is not limited in the embodiments of the present disclosure.

Optionally, after determining the frequency-domain resource allocation granularity corresponding to each carrier in the at least one carrier, the method further includes:

in a case that the frequency-domain resource allocation granularity determined by the network device belongs to the candidate frequency-domain resource allocation granularity set, sending, by the network device, a higher-layer parameter to the terminal, where the higher-layer parameter carries the frequency-domain resource allocation granularity; or,

in a case that the frequency-domain resource allocation granularity determined by the network device does not belong to the candidate frequency-domain resource allocation granularity set, not sending, by the network device, a higher-layer parameter, or sending, by the network device, a higher-layer parameter to the terminal, where the higher-layer parameter does not carry the frequency-domain resource allocation granularity.

For example, the network device may determine a value of one frequency-domain resource allocation granularity selected from the candidate frequency-domain resource allocation granularity set, and notify the terminal of it through a higher-layer parameter. The network device may also not send a higher-layer parameter or send a higher-layer parameter to the terminal, which does not carry the frequency-domain resource allocation granularity, when there is no value that meets the requirement for the frequency-domain resource allocation granularity in the candidate frequency-domain resource allocation granularity set, which is not limited in the embodiments of the present disclosure

Optionally, the resource allocation type corresponding to at least one carrier includes: a first resource allocation type and/or a second resource allocation type. A bit map is used in the first indication field to indicate frequency-domain resource allocation of a carrier of a first resource allocation type, and/or a resource indication value (RIV) is used in the first indication field to indicate frequency-domain resource allocation of a carrier of a second resource allocation type.

The determining, by the network device, the frequency-domain resource allocation granularity corresponding to each carrier in the at least one carrier includes:

determining, by the network device, the frequency-domain resource allocation granularity corresponding to each carrier in the at least one carrier based on a number of PRBs of a first BWP on the at least one carrier; or,

determining, by the network device, the frequency-domain resource allocation granularity corresponding to each carrier in the at least one carrier based on a candidate frequency-domain resource allocation granularity set.

Optionally, the generating, by the network device, the first indication field based on the frequency-domain resource allocation granularity corresponding to each carrier includes:

determining, by the network device, a number of resource block groups (RBGs) corresponding to the first BWP on each carrier based on the frequency-domain resource allocation granularity for each carrier and the number of PRBs for the first BWP on each carrier;

determining, by the network device, a number of bits occupied by each carrier in the first indication field based on the number of RBGs corresponding to the first BWP on each carrier; and

generating, by the network device, the first indication field according to a predetermined order of the at least one carrier and the number of bits occupied by each carrier in the first indication field.

Optionally, the number of RBGs corresponding to the first BWP on each carrier is determined by the following formula: $N_{RBG}^{CCi} = \left\lceil \left( N_{BWP,k}^{size,CCi} + \left( N_{BWP,k}^{start,CCi} \bmod P \right) \right) / P \right\rceil$, where $N_{RBG}^{CCi}$ is a number of RBGs corresponding to the first BWP on an i-th carrier in the at least one carrier, $N_{BWP,k}^{size,CCi}$ is a number of PRBs of the first BWP on the i-th carrier, $N_{BWP,k}^{start,CCi}$ is an index of a starting PRB of the first BWP on the i-th carrier, and P is the frequency-domain resource allocation granularity.

Optionally, the determining, by the network device, the number of bits occupied by each carrier in the first indication field based on the number of RBGs corresponding to each carrier includes:

for each carrier, determining, by the network device, the number of RBGs as the number of bits occupied by the carrier in the first indication field; or,

for each carrier, determining, by the network device, the number of bits occupied by the carrier in the first indication field by using the formula $L_{cci} = \log_2 \left( N_{RBG}^{CCi} (N_{RBG}^{CCi} + 1) / 2 \right)$, where $L_{cci}$ is a number of bits occupied by an i-th carrier in the first indication field, and $N_{RBG}^{CCi}$ is a number of RBGs corresponding to the i-th carrier.

For example, for a carrier with a frequency-domain resource allocation granularity determined according to the mapping relationship, the number of RBGs corresponding to the first BWP of each carrier is the number of bits occupied by the carrier in the first indication field. The network device side may cascade bit maps of the RBGs corresponding to each carrier in a predetermined order to form the first indication field.

For example, for a carrier *CCi* of a first resource allocation type, the number of RBGs corresponding to its first BWP is the number of bits occupied by the carrier in the first indication field. The network device side may cascade a bitmap of RBGs corresponding to the scheduled carrier CCi with an indication field of another carrier in a predetermined order to form the first indication field for multi-carrier scheduling. The indication field of the other carrier is specified as bitmap indication according to the protocol, or is specified as bitmap indication or RIV indication according to higher-layer configuration.

For example, for a carrier *CCi* of a second resource allocation type, the number of RBGs corresponding to the first BWP is $L_{cci} = \log_2\big(N_{RBG}^{CCi}(N_{RBG}^{CCi} + 1)/2\big)$. The network device side may cascade the RIV indication field corresponding to the carrier CCi with an indication field of another carrier in a predetermined order to form the first indication field. The indication field of the other carrier is designated as an RIV indication field according to protocol regulations, or is designated as a bitmap indication field or an RIV indication field according to higher-layer configuration.

Optionally, the predetermined order is one of the following:

cell indexes of cells correspond to indexes of all carriers in ascending order; or
cell indexes of cells correspond to indexes of all carriers in descending order.

It should be noted that the information processing method on the network device side in the embodiment of the present disclosure corresponds to the embodiment of the information processing method on the terminal side mentioned above. The embodiments can be mutually referenced and achieve the same technical effect. To avoid repetition, they will not be repeated here.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (Internet Protocol, IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (Base Transceiver Station, BTS) in the global system for mobile communications (Global System for Mobile communications, GSM) or code division multiple access (Code Division Multiple Access, CDMA), a NodeB in the wide-band code division multiple access (Wide-band Code Division Multiple Access, WCDMA), an evolved Node B (evolutional Node B, eNB or e-NodeB) in long term evolution (long term evolution, LTE) system, a 5G base station (gNB) in 5G network architecture (next generation system), a home evolved Node B (Home evolved Node B, HeNB), a relay node (relay node), a femto (femto), a pico (pico), or the like, which is not limited herein. In some network architectures, the network device may include a centralized unit (centralized unit, CU) node and a distributed unit (distributed unit, DU) node, which may be geographically separated.

The following specific embodiments will be used to explain the above method in the present disclosure.

Embodiment 1: a scheme where the RBG size of the RA Type0 is jointly determined for multiple carriers.

Scenario: a DCI can schedule four carriers, CC1, CC2, CC3, and CC4. If the higher-layer configuration resource allocation type is RA Type0, the RBG size P (i.e., the frequency-domain resource allocation granularity) and the FDRA field (i.e., the first indication field) in DCI are determined according to the following method.

In step 1, the total number $N_{BWP}^{size,total}$ of PRBs that can be scheduled by the DCI is calculated according to the following formula: $N_{BWP}^{size,total} = \sum N_{BWP}^{size,CCi}$, where $N_{BWP}^{size,CCi}$ represents a number of PRBs of an activated BWP on carrier *CCi*.

For example, if PRBs of CC1, CC2, CC3, and CC4 that the DCI can schedule are 200 PRBs, 200 PRBs, 120 PRBs, and 80 PRBs, respectively, then $N_{BWP}^{size,total} = N_{BWP}^{size,CC1} + N_{BWP}^{size,CC2} + N_{BWP}^{size,CC3} + N_{BWP}^{size,CC4} = 600 \text{ PRBs}$.

In step 2, an RBG size determination table for RA Type0 of the DCI is designed. An example is given that the DCI supports scheduling up to 4 carriers defined by a protocol. A maximum value of scheduled PRBs in this table is 275 PRBs * 4 = 1100 PRBs. There are several design methods for the RBG size P table as follows.

Example 1: a maximum value of the RBG size P is 64 PRBs. The specific table design method is to add two rows on the basis of the RBG size P determined by the relevant technology, and X1=32, Y1=64, X2=32, Y2=64, as shown in Table 1 below. The maximum number of bits for a length of the FDRA field is 18 bits.

Table 1

| BWP Size | scheduling granularity configuration 1 | scheduling granularity configuration 2 |
|---|---|---|
| 1~36 | 2 | 4 |
| 37~72 | 4 | 8 |
| 73~144 | 8 | 16 |
| 145~275 | 16 | 16 |
| 276~550 | X1=32 | X2=32 |
| 551~1100 | Y1=64 | Y2=64 |

Example 2: a maximum value of the RBG size P is 32 PRB. Due to the introduction of multi-carrier scheduling, an additional row is added to the RBG size P determination table in related technologies, with X1=32 and X2=32, as shown in Table 2. In the multi-carrier scheduling scenario, the maximum number of bits in the total length of the FDRA field is 35 bits.

Table 2

| BWP Size | scheduling granularity configuration 1 | scheduling granularity configuration 2 |
|---|---|---|
| 1~36 | 2 | 4 |
| 37~72 | 4 | 8 |
| 73~144 | 8 | 16 |
| 145~275 | 16 | 16 |
| 276~1100 | X1=32 | X2=32 |

In step 3, the RBG size P is determined based on a higher-layer resource allocation parameter, $N_{BWP}^{size,total}$, and the table given in step 2. For example, if $N_{BWP}^{size,total} = 600\mathrm{PRB}$, according to Table 1 above, the RBG size P corresponds to 64 PRBs; according to Table 2 above, the RBG size P corresponds to 32 PRBs.

In step 4, the number $N_{RBG}^{CCi}$ of RBGs contained in BWPs on each carrier is determined based on the RBG size P determined in Step 3 by using the following formula: $N_{RBG}^{CCi} = \left\lceil \left( N_{BWP,k}^{size,CCi} + \left( N_{BWP,k}^{start,CCi} \bmod P \right) \right) / P \right\rceil$, where $N_{RBG}^{CCi}$ represents the number of RBGs contained in the carrier *CCi*, $N_{BWP,k}^{size,CCi}$ represents the number of PRBs of an activated BWP, k on the carrier *CCi*, $N_{BWP,k}^{start,CCi}$ represents an index of a starting PRB of the activated BWP, k on the carrier *CCi*, and *CCi* represents a carrier that the DCI can schedule.

According to Table 1 above, the RBG size P corresponds to 64 PRBs.

For CC1, $N_{BWP,k}^{size,CC1} = 200, N_{BWP,k}^{start,CC1} = 0$, and $N_{RBG}^{CC1}$ is calculated as follows: $N_{RBG}^{CC1} = \left\lceil (200 + (0 \bmod 64))/64 \right\rceil = 4$ bits.

For CC2, $N_{BWP,k}^{size,CC2} = 200, N_{BWP,k}^{start,CC2} = 32$, and $N_{RBG}^{CC2}$ is calculated as follows: $N_{RBG}^{CC2} = \left\lceil (200 + (32 \bmod 64))/64 \right\rceil = 4$ bits.

For CC3, $N_{BWP,k}^{size,CC3} = 120, N_{BWP,k}^{start,CC3} = 0$, and $N_{RBG}^{CC3}$ is calculated as follows: $N_{RBG}^{CC3} = \left\lceil (120 + (0 \bmod 64))/64 \right\rceil = 2$ bits.

For CC4, $N_{BWP,k}^{size,CC4} = 80, N_{BWP,k}^{start,CC4} = 0$, and $N_{RBG}^{CC4}$ is calculated as follows:

$$N_{RBG}^{CC4} = \lceil (80 + (0 \bmod 64))/64 \rceil = 2 \text{ bits.}$$

According to Table 2 above, the RBG size P corresponds to 32 PRBs.

For CC1, $N_{BWP,k}^{size,CC1} = 200, N_{BWP,k}^{start,CC1} = 0$, and $N_{RBG}^{CC1}$ is calculated as follows:

$$N_{RBG}^{CC1} = \lceil (200 + (0 \bmod 32))/32 \rceil = 7 \text{ bits.}$$

For CC2, $N_{BWP,k}^{size,CC2} = 200, N_{BWP,k}^{start,CC2} = 32$, and $N_{RBG}^{CC2}$ is calculated as follows:

$$N_{RBG}^{CC2} = \lceil (200 + (32 \bmod 32))/32 \rceil = 7 \text{ bits.}$$

For CC3, $N_{BWP,k}^{size,CC3} = 120, N_{BWP,k}^{start,CC3} = 0$, $N_{RBG}^{CC3}$ is calculated as follows:

$$N_{RBG}^{CC3} = \lceil (120 + (0 \bmod 32))/32 \rceil = 4 \text{ bits.}$$

For CC4, $N_{BWP,k}^{size,CC4} = 80, N_{BWP,k}^{start,CC4} = 0$, $N_{RBG}^{CC4}$ is calculated as follows:

$$N_{RBG}^{CC4} = \lceil (80 + (0 \bmod 32))/32 \rceil = 3 \text{ bits.}$$

In step 5, bitmaps of RBGs corresponding to each scheduled carrier are cascaded in a predetermined order to form the FDRA field. As shown in FIG. 4, the predetermined order is a sequence of cell identification numbers from small to large, and bitmaps (FDRA field indication) corresponding to multiple carriers are cascaded together to form indication FDRA field indication in the DCI.

According to Table 1 above, an FDRA field corresponding to CC1 is L1=4 bits, an FDRA field corresponding to CC2 is L2=4 bits, an FDRA field corresponding to CC3 is L3=2 bits, and an FDRA field corresponding to CC4 is L4=2 bits. The FDRA fields of CC1, CC2, CC3 and CC4 are cascaded together, resulting in a total length of 12 bits for the FDRA field of the DCI.

According to Table 2 above, an FDRA field corresponding to CC1 is L1=7 bits, an FDRA field corresponding to CC2 is L2=7 bits, an FDRA field corresponding to CC3 is L3=4 bits, and an FDRA field corresponding to CC4 is L4=3 bits. The FDRA fields of CC1, CC2, CC3 and CC4 are cascaded together, resulting in a total length of 21 bits for the FDRA field of the DCI.

Optionally, step 1, step 2 and step 3 mentioned above may be replaced by the following steps.

The higher layer directly configures the RBG size P for the DCI through parameter 1, and candidate values for the RBG size P configured by the higher-layer are {2, 4, 8, 16, 32} or {2, 4, 8, 16, 32, 64}. For example, the RBG size directly configured by the higher-layer through parameter 1 is 32 PRBs.

Alternatively, the higher layer configures the RBG size P for the DCI through parameter 2, and candidate values for the RBG size P configured by the higher layer are {4, 8, 16, 32} or {4, 8, 16, 32, 64}. If parameter 2 is not configured, it is considered that the RBG size P is equal to 2 PRBs. For example, if the higher layer has configured multi-carrier scheduling for the terminal, but a value corresponding to parameter 2 is empty, then it is considered that RBG size P is equal to 2 PRBs.

Embodiment 2: a scheme where the RBG size of the RA Type0 is determined separately for a single carrier.

Scenario: a DCI can schedule four carriers CC1, CC2, CC3, and CC4, activated BWP ID=1, it is configured by a higher layer that a resource allocation type of CC1 is RA Type0, a resource allocation type of CC2 is RA Type0, a resource allocation type of CC3 is RA Type1, and a resource allocation type of CC4 is RA Type 1. A method for determining RBG sizes P for CC1 and CC2 and a method for determining an FDRA field of the DCI are as follows.

There are several possible parameters for resource allocation types of carriers configured by the higher layer for multi-carrier scheduling.

The higher layer implicitly configures a resource allocation type for each carrier in multi-carrier scheduling through a parameter resourceAllocation_mc.

The higher layer configures the resource allocation type for each carrier in multi-carrier scheduling through a parameter resourceAllocation_mc. If the parameter is not configured, a resource allocation type for single carrier scheduling will be followed.

Example 1: using the RBG size table from existing protocols, as shown in Table 3. When using a DCI for data scheduling, a RBG size P' corresponding to the DCI is $2^m \times P (m \geq 0)$ or $A \times P (A \geq 1)$, where values of m and A are specified in a protocol or configured by a higher layer, and P is a value determined from the table. For example, if the protocol specifies or the higher layer configures a factor A=2, then $P' = 2 \times P$.

Table 1

| BWP Size | scheduling granularity configuration 1 | scheduling granularity configuration 2 |
|---|---|---|
| 1~36 | 2 | 4 |
| 37~72 | 4 | 8 |
| 73~144 | 8 | 16 |
| 145~275 | 16 | 16 |

For CC1, $N_{BWP,1}^{size,CC1} = 200$, according to Table 3 above, P=16 PRBs is determined by using configuration 1, and the RBG size $P'$ = 32 PRBs.

For CC2, $N_{BWP1}^{size,CC2} = 100$, according to Table 3 above, P=8 PRBs is determined by using configuration 1, and the RBG size $P'$ = 16 PRBs.

The method for calculating the number $N_{RBG}^{CCi}$ of RBGs contained in BWPs on CC1 and CC2 is the same as that in step 4 in Example 1, and will not be repeated here. The bitmap of the RBG corresponding to the scheduled carrier and an FDRA field corresponding to another carrier are cascaded in a predetermined order to form an FDRA field. In this regard, the FDRA field of the other carrier may be indicated in the form of bitmap or RIV.

Example 2: redesigning an RBG size P determination table that is only applicable to multi-carrier scheduling. The table includes configurations for two types of RBG sizes, and the RBG size corresponding to each BWP range and configuration is N times of that specified in existing protocols, as shown in Table 4, taking 2 times as an example.

Table 2

| BWP Size | scheduling granularity configuration 1 | scheduling granularity configuration 2 |
|---|---|---|
| 1~36 | 4 | 8 |
| 37~72 | 8 | 16 |
| 73~144 | 16 | 32 |
| 145~275 | 32 | 32 |

For CC1, $N_{BWP,1}^{size,CC1} = 200$, according to Table 4 above, RBG size P' = 32 PRBs is directly determined by using configuration 1.

For CC2, $N_{BWP1}^{size,CC2} = 100$, according to Table 4 above, RBG size P' = 16 PRBs s directly determined by using configuration 1.

The other steps in Example 2 are the same as those in Example 1 and will not be repeated here.

Example 3: redesigning an RBG size P determination table that is only applicable to multi-carrier scheduling. The table includes a configuration of RBG size, and the RBG size corresponding to each BWP range and configuration is N times of that specified in existing protocols. In Table 5 below, 1 time is taken as an example.

Table 3

| BWP Size | scheduling granularity configuration 1 |
|---|---|
| 1~36 | 4 |
| 37~72 | 8 |
| 73~144 | 16 |
| 145~275 | 32 |

For CC1, $N_{BWP,1}^{size,CC1} = 200$, according to Table 5 above, RBG size P' = 32 PRBs is directly determined.

For CC2, $N_{BWP,1}^{size,CC2} = 100$, according to Table 5 above, RBG size P' = 16 PRBs is directly determined.

The other steps in Example 2 are the same as those in Example 1 and will not be repeated here.

Embodiment 3: a scheme where the RBG size of the RA Type1 is determined separately for a single carrier.

In step 1, the RBG size P is configured by a parameter resourceAllocationType1GranularityDCI-1-X/0_X in higher-layer configuration with values of 4, 8 and 16. If this parameter is not configured, the default DCI scheduling granularity is RBG=2 PRBs. The parameter configured by the higher layer may be individually configured for each BWP, or jointly configured for all BWPs involved in multi-carrier scheduling.

In step 2, an RIV on each carrier CCi is determined based on the RBG size P, specifically:

if $\left(L_{\text{RBGs}} - 1\right) \leq \left\lfloor \frac{N_{RBG}}{2} \right\rfloor$ , then RIV = $N_{RBG}$ ($L_{\text{RBGs}}$ - 1) + RBG$_{\text{start}}$;

otherwise, RIV = $N_{RBG}$ ($N_{RBG}$ - $L_{\text{RBGs}}$ - 1) + ($N_{RBG}$ - 1 + RBG$_{\text{start}}$),

where $L_{\text{RBGs}} \geq 1$, and $L_{\text{RBGs}}$ shall not exceed $N_{RBG}$ - RBG$_{\text{start}}$; $N_{RBG}$ represents a number of consecutive RBGs in a BWP, $L_{\text{RBGs}}$ represents a number of scheduled consecutive RBGs, and RBG$_{\text{start}}$ represents a starting index of the scheduled RBGs.

In step 3, FDRA indication fields corresponding to each carrier are cascaded in ascending order based on cell indexes of the scheduled carriers, to form an FDRA field of the DCI. The length of the FDRA field of the DCI is calculated using the following formula: L$_{\text{total}}$ = Σ L$_{\text{cci}}$, where L$_{\text{total}}$ represents a length of the FDRA field of the DCI; L$_{\text{cci}}$ represents a length of the FDRA field corresponding to CCi; the length of the FDRA field of CCi is determined as follows:

$$L_{\text{cci}} = \left\lceil \log_2\left(N_{\text{RBG}}^{\text{CCi}}(N_{\text{RBG}}^{\text{CCi}} + 1)/2\right) \right\rceil, \quad N_{\text{RBG}}^{\text{CCi}} = \left\lceil N_{\text{BWP}}^{\text{CCi}}/P \right\rceil. \quad N_{\text{RBG}}^{\text{CCi}}$$ represents a number of RBGs contained in a BWP in CCi; and $N_{\text{BWP}}^{\text{CCi}}$ represents a number of PRBs contained in a BWP in CCi.

The terminal obtains frequency-domain resource allocation of PUSCH or PDSCH by reading RIV indication in the FDRA field corresponding to each CCi.

Embodiment 4: a carrier in a deactivated state or a carrier having no activated BWP.

In a case that a carrier is in a deactivated state, or a carrier does not have an activated BWP, a length of an FDRA field is determined based on a preset BWP bandwidth for this carrier. The preset BWP bandwidth is one of the following:

a BWP bandwidth with a minimum or maximum BWP ID on this carrier;
a BWP bandwidth on this carrier consistent with a BWP ID indicated in the DCI; or
a BWP having a minimum or maximum bandwidth on this carrier.

An effective time of this method is consistent with an effective time of carrier deactivation. For example, DCI can schedule four carriers: CC1, CC2, CC3, and CC4. CC1 is configured with 4 BWPs, which are: BWP ID=1, $N_{\text{BWP},1}^{\text{size,CC1}} = 100$ ; BWP ID=2, $N_{\text{BWP},2}^{\text{size,CC1}} = 200$ ; BWP ID=3, $N_{\text{BWP},3}^{\text{size,CC1}} = 50$ ; BWP ID=4, $N_{\text{BWP},4}^{\text{size,CC1}} = 20$ . When CC1 is deactivated, or does not have an activated BWP, the length of the FDRA field is determined according to the preset BWP bandwidth. For example, according to the BWP bandwidth with the minimum BWP ID, the length of the FDRA field of CC1 is calculated by using the BWP with BWP ID=1; according to the BWP bandwidth consistent with the BWP ID indicated in the DCI, if the DCI indicates BWP ID=3, then the length of the FDRA field of CC1 is calculated according to BWP ID=3; according to the BWP with the minimum bandwidth, the length of the FDRA field of CC1 is calculated according to BWP ID=4.

The information processing method of the present disclosure is introduced in the above embodiments. A corresponding apparatus, a terminal and a network device will be further explained below in embodiments in conjunction with the accompanying drawings.

As shown in FIG. 5, an embodiment of the present disclosure provides an information processing apparatus, including a memory 51, a transceiver 52, and a processor 53. The memory 51 is configured to store a computer program; the transceiver 52 is configured to transmit and receive data under the control of the processor 53; the transceiver 52 is configured to receive and transmit data under the control of the processor 53; the processor 53 is configured to read the computer program from the memory 51 to perform the following operations:

receiving downlink control information (DCI) sent by a network device, where the DCI includes a first indication field for indicating frequency-domain resource allocation of at least one carrier;
determining a frequency-domain resource allocation granularity corresponding to each carrier in the at least one carrier; and
determining a quantity of bits corresponding to each carrier in the first indication field based on the frequency-domain resource allocation granularity corresponding to each carrier.

Optionally, the processor 53 is configured to read the computer program from the memory 51 to perform the following operations:

determining the frequency-domain resource allocation granularity corresponding to each carrier in the at least one carrier based on a number of physical resource blocks (PRBs) of a first bandwidth part (BWP) on the at least one carrier; or,
determining the frequency-domain resource allocation granularity corresponding to each carrier in the at least one carrier based on higher-layer parameter configuration by the network device or agreement by a protocol.

Optionally, the processor 53 is configured to read the computer program from the memory 51 and perform the following operations:

determining a total number of PRBs of a first BWP on at least one schedulable carrier configured by the DCI;
determining a first frequency-domain resource allocation granularity corresponding to the total number of PRBs of the first BWP based on a mapping relationship between different PRB numerical ranges and frequency-domain resource allocation granularities, where a maximum value in the PRB numerical ranges is a maximum total number of PRBs configurable for the at least one schedulable carrier configured by the DCI; and
determining the first frequency-domain resource allocation granularity as the frequency-domain resource allocation granularity corresponding to each carrier in the at least one carrier.

Optionally, a maximum value of the frequency-domain resource allocation granularities in the mapping relationship is greater than 16.

Optionally, the processor 53 is configured to read the computer program from the memory 51 and perform the following operations:

for each carrier in the at least one carrier, determining a number of PRBs of a first BWP on a first carrier, where the first carrier is any carrier of the at least one carrier;
determining a second frequency-domain resource allocation granularity corresponding to the number of the PRBs of the first BWP on the first carrier based on a mapping relationship between different PRB numerical ranges and frequency-domain resource allocation granularities, where a maximum value in the PRB numerical ranges is a maximum number of PRBs configurable for one carrier; and
determining the frequency-domain resource allocation granularity corresponding to the first carrier based on the second frequency-domain resource allocation granularity.

Optionally, the processor 53 is configured to read the computer program from the memory 51 and perform the following operations: determining a product of the second frequency-domain resource allocation granularity and a preset value as the frequency-domain resource allocation granularity corresponding to the first carrier, where the frequency-domain resource allocation granularity in the mapping relationship satisfies: $P = 2^n$, where P is the frequency-domain resource allocation granularity, $1 \leq n \leq N$ and $N \geq 4$; the preset value is $2^m$ or A, $m \geq 0$, $A \geq 1$, and n, N, m and A are integers.

Optionally, the frequency-domain resource allocation granularity in the mapping relationship satisfies: $P = B * 2^n$, where P is the frequency-domain resource allocation granularity, $1 \leq n \leq N$, $N \geq 4$, $B \geq 1$, and n, B, N are integers.

Optionally, the first BWP is an activated BWP on a carrier in an activated state; and/or, the first BWP is a preset BWP on a carrier in a deactivated state or on a carrier without any activated BWP, where the preset BWP is one of the following:

a BWP with a smallest BWP index;
a BWP with a largest BWP index;
a BWP with a largest number of PRBs;
a BWP with a smallest number of PRBs; or,
a BWP indicated in the DCI.

Optionally, the processor 53 is configured to read the computer program from the memory 51 and perform the following operations:

receiving a higher-layer parameter sent by the network device, and determining the frequency-domain resource allocation granularity corresponding to each carrier in the at least one carrier based on a frequency-domain resource allocation granularity carried in the higher-layer parameter; and/or,

determining the frequency-domain resource allocation granularity corresponding to each carrier in the at least one carrier based on a preset frequency-domain resource allocation granularity, where the preset frequency-domain resource allocation granularity is configured by the network device or agreed upon by the protocol.

Optionally, the frequency-domain resource allocation granularity carried in the higher-layer parameter is a frequency-domain resource allocation granularity jointly configured for the at least one carrier; or,

the frequency-domain resource allocation granularity carried in the higher-layer parameter is a frequency-domain resource allocation granularity configured separately for each carrier in the at least one carrier.

Optionally, a resource allocation type corresponding to the at least one carrier includes: a first resource allocation type and/or a second resource allocation type, where a bit map is used in the first indication field to indicate frequency-domain resource allocation of a carrier of a first resource allocation type, and/or a resource indication value (RIV) is used in the first indication field to indicate frequency-domain resource allocation of a carrier of a second resource allocation type. The processor 53 is used to read the computer program from the memory 51 and perform the following operations:

determining, by the terminal, a frequency-domain resource allocation granularity corresponding to each carrier of the first resource allocation type based on a number of PRBs of a first BWP on the at least one carrier; or,

determining, by the terminal, a frequency-domain resource allocation granularity corresponding to each carrier of the first resource allocation type or the second resource allocation type based on higher-layer parameter configuration by the network device or agreement by a protocol.

Optionally, the processor 53 is configured to read the computer program from the memory 51 and perform the following operations:

determining a number of resource block groups (RBGs) corresponding to a first BWP on each carrier based on the frequency-domain resource allocation granularity corresponding to each carrier and a number of PRBs of the first BWP on each carrier;

determining a number of bits occupied by each carrier in the first indication field based on the number of the RBGs corresponding to the first BWP on each carrier; and

determining the bit position corresponding to each carrier in the first indication field according to the number of the bits occupied by each carrier in the first indication field, and a predetermined order of the at least one carrier.

Optionally, the number of the RBGs corresponding to the first BWP on each carrier is determined by the following formula: $N_{RBG}^{CCi} = \left\lceil \left( N_{BWP,k}^{size,CCi} + \left( N_{BWP,k}^{start,CCi} \mod P \right) \right) / P \right\rceil$, where $N_{RBG}^{CCi}$ is a number of RBGs corresponding to the first BWP on an i-th carrier in the at least one carrier, $N_{BWP,k}^{size,CCi}$ is a number of PRBs of the first BWP on the i-th carrier, $N_{BWP,k}^{start,CCi}$ is an index of a starting PRB of the first BWP on the i-th carrier, and P is the frequency-domain resource allocation granularity.

Optionally, the processor 53 is configured to read the computer program from the memory 51 and perform the following operations:

for each carrier, determining the number of the RBGs as the number of the bits occupied by the carrier in the first indication field; or,

for each carrier, determining the number of bits occupied by the carrier in the first indication field by using a formula $L_{cci} = \log_2 \left( N_{RBG}^{CCi} (N_{RBG}^{CCi} + 1)/2 \right)$, where $L_{cci}$ is a number of bits occupied by an i-th carrier in the first indication field, and $N_{RBG}^{CCi}$ is a number of RBGs corresponding to the i-th carrier.

Optionally, the predetermined order is one of the following:

cell indexes of cells correspond to indexes of all carriers in ascending order; or
cell indexes of cells correspond to indexes of all carriers in descending order.

In FIG. 5, the bus architecture may include any number of interconnected buses and bridges, specifically one or more processors represented by the processor 53 and various circuits of memory represented by the memory 51 connected together. The bus architecture may also link various other circuits such as peripheral devices, voltage regulators, power management circuits, etc., which are well-known in the art, and therefore, no further descriptions are provided herein. The bus interface provides interfaces. The transceiver 52 may be multiple components, including a transmitter and a receiver, providing a unit for communicating with various other devices over transmission media, including wireless channels, wired channels, optical cables, and other transmission media. For different user equipment, the user interface 54 may also be an interface capable of externally or internally connecting to required equipment. The connected equipment includes but not limited to a keypad, a display, a speaker, a microphone, a joystick, and the like. The processor 53 is responsible for managing the bus architecture and usual processing, and the memory 51 may store the data used by the processor 53 when performing operations.

The processor 53 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

It should be noted that the above apparatus provided in the embodiment of the present disclosure can implement all method steps implemented in the above embodiments about the information processing method at the network device side, and can achieve the same technical effects. Therefore, descriptions and beneficial effects of this embedment that are the same as the method embodiments will not be described here in detail.

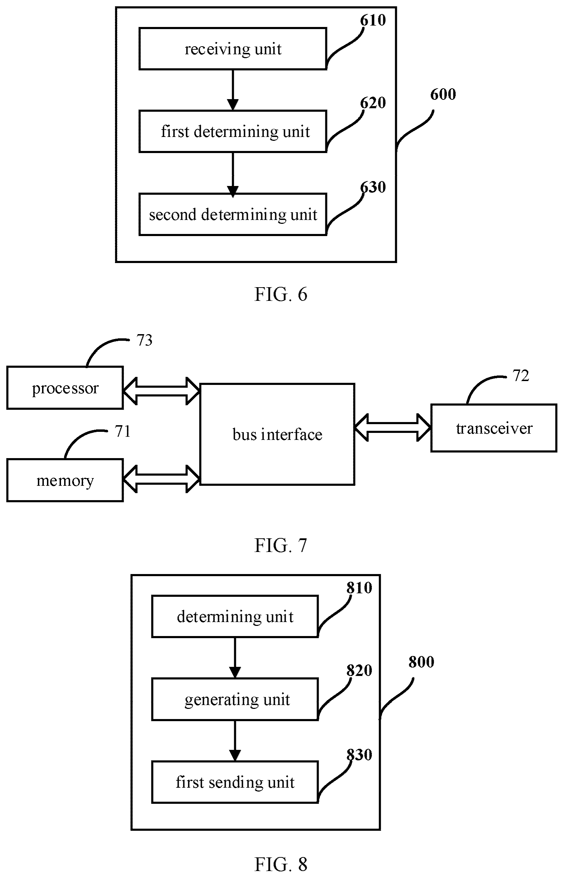

Specifically, as shown in FIG. 6, an embodiment of the present disclosure provides a terminal 600, including:

a receiving unit 610, configured to receive downlink control information (DCI) sent by a network device, where the DCI includes a first indication field for indicating frequency-domain resource allocation of at least one carrier;
a first determining unit 620, configured to determine a frequency-domain resource allocation granularity corresponding to each carrier in the at least one carrier; and
a second determining unit 630, configured to determine a quantity of bits corresponding to each carrier in the first indication field based on the frequency-domain resource allocation granularity corresponding to each carrier.

Optionally, the first determining unit 620 is further configured to:

determine the frequency-domain resource allocation granularity corresponding to each carrier in the at least one carrier based on a number of physical resource blocks (PRBs) of a first bandwidth part (BWP) on the at least one carrier; or,
determine the frequency-domain resource allocation granularity corresponding to each carrier in the at least one carrier based on higher-layer parameter configuration by the network device or agreement by a protocol.

Optionally, the first determining unit 620 is further configured to:

determine a total number of PRBs of a first BWP on at least one schedulable carrier configured by the DCI;
determine a first frequency-domain resource allocation granularity corresponding to the total number of PRBs of the first BWP based on a mapping relationship between different PRB numerical ranges and frequency-domain resource allocation granularities, where a maximum value in the PRB numerical ranges is a maximum total number of PRBs configurable for the at least one schedulable carrier configured by the DCI; and
determine the first frequency-domain resource allocation granularity as the frequency-domain resource allocation granularity corresponding to each carrier in the at least one carrier.

Optionally, the total number of PRBs of all the first BWPs on the at least one schedulable carrier configured by the DCI is determined by the following formula: $N_{BWP}^{size,total} = \sum N_{BWP}^{size,CCi}$, where $N_{BWP}^{size,total}$ is the total number of PRBs of the first BWP(s) on the at least one schedulable carrier configured by the DCI, and $N_{BWP}^{size,CCi}$ is the number of PRBs of the first BWP(s) on the i-th carrier among the at least one schedulable carrier configured by the DCI.

Optionally, a maximum value of the frequency-domain resource allocation granularities in the mapping relationship is greater than 16.

Optionally, the first determining unit 620 is further configured to:

for each carrier in the at least one carrier, determine a number of PRBs of a first BWP on a first carrier, where the first carrier is any carrier of the at least one carrier;
determine a second frequency-domain resource allocation granularity corresponding to the number of the PRBs of the first BWP on the first carrier based on a mapping relationship between different PRB numerical ranges and frequency-domain resource allocation granularities, where a maximum value in the PRB numerical ranges is a maximum number of PRBs configurable for one carrier; and

determine the frequency-domain resource allocation granularity corresponding to the first carrier based on the second frequency-domain resource allocation granularity.

Optionally, the first determining unit 620 is further configured to: determine a product of the second frequency-domain resource allocation granularity and a preset value as the frequency-domain resource allocation granularity corresponding to the first carrier, where the frequency-domain resource allocation granularity in the mapping relationship satisfies: $P = 2^n$, where P is the frequency-domain resource allocation granularity, $1 \leq n \leq N$ and $N \geq 4$; the preset value is $2^m$ or A, $m \geq 0$, $A \geq 1$, and n, N, m and A are integers.

Optionally, the frequency-domain resource allocation granularity in the mapping relationship satisfies: $P = B * 2^n$, where P is the frequency-domain resource allocation granularity, $1 \leq n \leq N$, $N \geq 4$, $B \geq 1$, and n, B, N are integers.

Optionally, the first BWP is an activated BWP on a carrier in an activated state; and/or, the first BWP is a preset BWP on a carrier in a deactivated state or on a carrier without any activated BWP, where the preset BWP is one of the following:

a BWP with a smallest BWP index;
a BWP with a largest BWP index;
a BWP with a largest number of PRBs;
a BWP with a smallest number of PRBs; or,
a BWP indicated in the DCI.

Optionally, the determining, by the terminal, the frequency-domain resource allocation granularity corresponding to each carrier in the at least one carrier based on the higher-layer parameter configuration by the network device or the agreement by the protocol includes:

receiving a higher-layer parameter sent by the network device, and determining the frequency-domain resource allocation granularity corresponding to each carrier in the at least one carrier based on a frequency-domain resource allocation granularity carried in the higher-layer parameter; and/or,
determining the frequency-domain resource allocation granularity corresponding to each carrier in the at least one carrier based on a preset frequency-domain resource allocation granularity, where the preset frequency-domain resource allocation granularity is configured by the network device or agreed upon by the protocol.

Optionally, the frequency-domain resource allocation granularity carried in the higher-layer parameter is a frequency-domain resource allocation granularity jointly configured for the at least one carrier; or,
the frequency-domain resource allocation granularity carried in the higher-layer parameter is a frequency-domain resource allocation granularity configured separately for each carrier in the at least one carrier.

Optionally, a resource allocation type corresponding to the at least one carrier includes: a first resource allocation type and/or a second resource allocation type, where a bit map is used in the first indication field to indicate frequency-domain resource allocation of a carrier of a first resource allocation type, and/or a resource indication value (RIV) is used in the first indication field to indicate frequency-domain resource allocation of a carrier of a second resource allocation type. The first determining unit 620 is further configured to:

determine a frequency-domain resource allocation granularity corresponding to each carrier of the first resource allocation type based on a number of PRBs of a first BWP on the at least one carrier; or,
determine a frequency-domain resource allocation granularity corresponding to each carrier of the first resource allocation type or the second resource allocation type based on higher-layer parameter configuration by the network device or agreement by a protocol.

Optionally, the second determining unit 630 is further configured to:

determine a number of resource block groups (RBGs) corresponding to a first BWP on each carrier based on the frequency-domain resource allocation granularity corresponding to each carrier and a number of PRBs of the first BWP on each carrier;
determine a number of bits occupied by each carrier in the first indication field based on the number of the RBGs corresponding to the first BWP on each carrier; and
determine the bit position corresponding to each carrier in the first indication field according to the number of the bits occupied by each carrier in the first indication field, and a predetermined order of the at least one carrier.

Optionally, the number of the RBGs corresponding to the first BWP on each carrier is determined by the following formula: $N_{RBG}^{CCi} = \left\lceil \left( N_{BWP,k}^{size,CCi} + \left( N_{BWP,k}^{start,CCi} \bmod P \right) \right) / P \right\rceil$, where $N_{RBG}^{CCi}$ is a number of RBGs corresponding to the first BWP on an i-th carrier in the at least one carrier, $N_{BWP,k}^{size,CCi}$ is a number of PRBs of the first BWP on the i-th carrier, $N_{BWP,k}^{start,CCi}$ is an index of a starting PRB of the first BWP on the i-th carrier, and P is the frequency-domain resource allocation granularity.

Optionally, the second determining unit 630 is further configured to:

for each carrier, determine the number of the RBGs as the number of the bits occupied by the carrier in the first indication field; or,

for each carrier, determine the number of bits occupied by the carrier in the first indication field by using a formula $L_{cci} = \log_2\left( N_{RBG}^{CCi}(N_{RBG}^{CCi} + 1)/2 \right)$, where $L_{cci}$ is a number of bits occupied by an i-th carrier in the first indication field, and $N_{RBG}^{CCi}$ is a number of RBGs corresponding to the i-th carrier.

Optionally, the predetermined order is one of the following:

cell indexes of cells correspond to indexes of all carriers in ascending order; or

cell indexes of cells correspond to indexes of all carriers in descending order.

It should be noted that the terminal provided in the embodiment of the present disclosure can implement all method steps implemented in the above embodiments of the information processing method on the terminal side, and can achieve the same technical effects. Therefore, the part and beneficial effects of this embedment that are the same as the method embodiments will not be described here in detail.

As shown in FIG. 7, an embodiment of the present disclosure provides a network device, including a memory 71, a transceiver 72, and a processor 73. The memory 71 is configured to store a computer program; the transceiver 72 is configured to transmit and receive data under the control of the processor 73; the processor 73 is configured to read the computer program from the memory 71 and perform the following operations:

determining a frequency-domain resource allocation granularity corresponding to each carrier in at least one carrier;

generating a first indication field based on the frequency-domain resource allocation granularity corresponding to each carrier, where the first indication field is used to indicate frequency-domain resource allocation of the at least one carrier; and

sending downlink control information (DCI) to a terminal, where the DCI includes the first indication field.

Optionally, the processor 73 is configured to read the computer program from the memory 71 and perform the following operations:

determining the frequency-domain resource allocation granularity corresponding to each carrier in the at least one carrier based on a number of physical resource blocks (PRBs) of a first bandwidth part (BWP) on the at least one carrier; or,

determining the frequency-domain resource allocation granularity corresponding to each carrier in the at least one carrier based on a candidate frequency-domain resource allocation granularity set.

Optionally, the processor 73 is configured to read the computer program from the memory 71 and perform the following operations:

determining a total number of PRBs of a first BWP on at least one schedulable carrier configured by the DCI;

determining a first frequency-domain resource allocation granularity corresponding to the total number of PRBs of the first BWP based on a mapping relationship between different PRB numerical ranges and frequency-domain resource allocation granularities, where a maximum value in the PRB numerical ranges is a maximum total number of PRBs configurable for the at least one schedulable carrier configured by the DCI; and

determining the first frequency-domain resource allocation granularity as the frequency-domain resource allocation granularity corresponding to each carrier in the at least one carrier.

Optionally, the maximum value of the frequency-domain resource allocation granularity in the candidate frequency-domain resource allocation granularity set or mapping relationship is greater than 16.

Optionally, the processor 73 is configured to read the computer program from the memory 71 and perform the following operations:

for each carrier in the at least one carrier, determining a number of PRBs of a first BWP on a first carrier, where the first carrier is any carrier of the at least one carrier;

determining a second frequency-domain resource allocation granularity corresponding to the number of the PRBs of the first BWP on the first carrier based on a mapping relationship between different PRB numerical ranges and frequency-domain resource allocation granularities, where a maximum value in the PRB numerical ranges is a maximum number of PRBs configurable for one carrier; and

determining the frequency-domain resource allocation granularity corresponding to the first carrier based on the second frequency-domain resource allocation granularity.

Optionally, the processor 73 is configured to read the computer program from the memory 71 and perform the following operations: determining a product of the second frequency-domain resource allocation granularity and a preset value as the frequency-domain resource allocation granularity corresponding to the first carrier, where the frequency-domain resource allocation granularity in the mapping relationship satisfies: $P = 2^n$, where P is the frequency-domain resource allocation granularity, $1 \leq n \leq N$ and $N \geq 4$; the preset value is $2^m$ or A, $m \geq 0$, $A \geq 1$, and n, N, m and A are integers.

Optionally, the frequency-domain resource allocation granularity in the mapping relationship satisfies: $P = B * 2^n$, where P is the frequency-domain resource allocation granularity, $1 \leq n \leq N$, $N \geq 4$, $B \geq 1$, and n, B, N are integers.

Optionally, the first BWP is an activated BWP on a carrier in an activated state; and/or, the first BWP is a preset BWP on a carrier in a deactivated state or on a carrier without any activated BWP. The preset BWP is one of the following:

a BWP with a smallest BWP index;

a BWP with a largest BWP index;

a BWP with a largest number of PRBs;

a BWP with a smallest number of PRBs; or,

a BWP indicated in the DCI.

Optionally, the processor 73 configured used to read the computer program from the memory 71 and perform the following operations:

sending a higher-layer parameter to the terminal, where the higher-layer parameter carries the frequency-domain resource allocation granularity, where the frequency-domain resource allocation granularity carried in the higher-layer parameter is a frequency-domain resource allocation granularity jointly configured for the at least one carrier; or, the frequency-domain resource allocation granularity carried in the higher-layer parameter is a frequency-domain resource allocation granularity configured separately for each carrier in the at least one carrier.

Optionally, the processor 73 is configured to read the computer program from the memory 71 and perform the following operations:

in a case that the frequency-domain resource allocation granularity determined by the network device belongs to the candidate frequency-domain resource allocation granularity set, sending a higher-layer parameter to the terminal, where the higher-layer parameter carries the frequency-domain resource allocation granularity; or,

in a case that the frequency-domain resource allocation granularity determined by the network device does not belong to the candidate frequency-domain resource allocation granularity set, not sending a higher-layer parameter, or sending a higher-layer parameter to the terminal, where the higher-layer parameter does not carry the frequency-domain resource allocation granularity.

Optionally, a resource allocation type corresponding to the at least one carrier includes: a first resource allocation type and/or a second resource allocation type, where a bit map is used in the first indication field to indicate frequency-domain resource allocation of a carrier of a first resource allocation type, and/or a resource indication value (RIV) is used in the first indication field to indicate frequency-domain resource allocation of a carrier of a second resource allocation type. The processor 73 is configured to read the computer program from the memory 71 and perform the following operations:

determining the frequency-domain resource allocation granularity corresponding to each carrier in the at least one carrier based on a number of physical resource blocks (PRBs) of a first bandwidth part (BWP) on the at least one carrier; or,

determining the frequency-domain resource allocation granularity corresponding to each carrier in the at least one carrier based on a candidate frequency-domain resource allocation granularity set.

Optionally, the processor 73 is configured to read the computer program from the memory 71 and perform the following operations:

determining a number of resource block groups (RBGs) corresponding to a first BWP on each carrier based on the frequency-domain resource allocation granularity corresponding to each carrier and a number of PRBs of the first BWP on each carrier;

determining a number of bits occupied by each carrier in the first indication field based on the number of the RBGs corresponding to the first BWP on each carrier; and

determining the bit position corresponding to each carrier in the first indication field according to the number of the bits occupied by each carrier in the first indication field, and a predetermined order of the at least one carrier.

Optionally, the number of the RBGs corresponding to the first BWP on each carrier is determined by the following formula: $N_{RBG}^{CCi} = \left\lceil \left( N_{BWP,k}^{size,CCi} + \left( N_{BWP,k}^{start,CCi} \bmod P \right) \right) / P \right\rceil$, where $N_{RBG}^{CCi}$ is a number of RBGs corresponding to the first BWP on an i-th carrier in the at least one carrier, $N_{BWP,k}^{size,CCi}$ is a number of PRBs of the first BWP on the i-th carrier, $N_{BWP,k}^{start,CCi}$ is an index of a starting PRB of the first BWP on the i-th carrier, and P is the frequency-domain resource allocation granularity.

Optionally, the processor 73 is configured to read the computer program from the memory 71 and perform the following operations:

for each carrier, determining the number of the RBGs as the number of the bits occupied by the carrier in the first indication field; or,

for each carrier, determining the number of bits occupied by the carrier in the first indication field by using a formula $L_{cci} = \log_2 \left( N_{RBG}^{CCi} (N_{RBG}^{CCi} + 1)/2 \right)$, where $L_{cci}$ is a number of bits occupied by an i-th carrier in the first indication field, and $N_{RBG}^{CCi}$ is a number of RBGs corresponding to the i-th carrier.

Optionally, the predetermined order is one of the following:

cell indexes of cells correspond to indexes of all carriers in ascending order; or
cell indexes of cells correspond to indexes of all carriers in descending order.

In FIG. 7, the bus architecture may include any number of interconnected buses and bridges, specifically one or more processors represented by the processor 73 and various circuits of memory represented by the memory 71 connected together. The bus architecture may also link various other circuits such as peripheral devices, voltage regulators, power management circuits, etc., which are well-known in the art, and therefore, no further descriptions are provided herein. The bus interface provides interfaces. The transceiver 72 may be multiple components, including a transmitter and a receiver, providing a unit for communicating with various other devices over transmission media, including wireless channels, wired channels, optical cables, and other transmission media. The processor 73 is responsible for managing the bus architecture and usual processing, and the memory 71 may store the data used by the processor 73 when performing operations.

The processor 73 may be a CPU, ASIC, FPGA or CPLD. The processor may also adopt a multi-core architecture.

The processor is configured to execute any one of the methods provided in the embodiments of the present disclosure according to the obtained executable instructions by invoking the computer program stored in the memory. The processor and the memory may also be physically separated.

It should be noted that the above-mentioned apparatus provided in the embodiment of the present disclosure can achieve all the method steps implemented in embodiment of the information processing method on the network device side, and may achieve the same technical effects. Therefore, the specific descriptions and beneficial effects that are the same as those of the method embodiment will not be introduced here in detail.

Specifically, as shown in FIG. 8, an embodiment of the present disclosure provides a network device 800, including:

a determining unit 810, configured to determine a frequency-domain resource allocation granularity corresponding to each carrier in at least one carrier;

a generating unit 820, configured to generate a first indication field based on the frequency-domain resource allocation granularity corresponding to each carrier, where the first indication field is used to indicate frequency-domain resource allocation of the at least one carrier; and
a first sending unit 830, configured to send downlink control information (DCI) to a terminal, where the DCI includes the first indication field.

Optionally, the determining unit 810 is further configured to:

determine the frequency-domain resource allocation granularity corresponding to each carrier in the at least one carrier based on a number of physical resource blocks (PRBs) of a first bandwidth part (BWP) on the at least one carrier; or,
determine the frequency-domain resource allocation granularity corresponding to each carrier in the at least one carrier based on a candidate frequency-domain resource allocation granularity set.

Optionally, the determining unit 810 is further configured to:

determine a total number of PRBs of a first BWP on at least one schedulable carrier configured by the DCI;
determine a first frequency-domain resource allocation granularity corresponding to the total number of PRBs of the first BWP based on a mapping relationship between different PRB numerical ranges and frequency-domain resource allocation granularities, where a maximum value in the PRB numerical ranges is a maximum total number of PRBs configurable for the at least one schedulable carrier configured by the DCI; and
determine the first frequency-domain resource allocation granularity as the frequency-domain resource allocation granularity corresponding to each carrier in the at least one carrier.

Optionally, the total number of PRBs of all the first BWPs on the at least one schedulable carrier configured by the DCI is determined by the following formula: $N_{BWP}^{size,total} = \sum N_{BWP}^{size,CCi}$, where $N_{BWP}^{size,total}$ is the total number of PRBs of the first BWP(s) on the at least one schedulable carrier configured by the DCI, and $N_{BWP}^{size,CCi}$ is the number of PRBs of the first BWP(s) on the i-th carrier among the at least one schedulable carrier configured by the DCI.

Optionally, a maximum value of the frequency-domain resource allocation granularities in the candidate frequency-domain resource allocation granularity set or in the mapping relationship is greater than 16.

Optionally, the determining unit 810 is further configured to:

for each carrier in the at least one carrier, determine a number of PRBs of a first BWP on a first carrier, where the first carrier is any carrier of the at least one carrier;
determine a second frequency-domain resource allocation granularity corresponding to the number of the PRBs of the first BWP on the first carrier based on a mapping relationship between different PRB numerical ranges and frequency-domain resource allocation granularities, where a maximum value in the PRB numerical ranges is a maximum number of PRBs configurable for one carrier; and
determine the frequency-domain resource allocation granularity corresponding to the first carrier based on the second frequency-domain resource allocation granularity.

Optionally, the determining unit 810 is further configured to: determine a product of the second frequency-domain resource allocation granularity and a preset value as the frequency-domain resource allocation granularity corresponding to the first carrier, where the frequency-domain resource allocation granularity in the mapping relationship satisfies: $P = 2^n$, where P is the frequency-domain resource allocation granularity, $1 \leq n \leq N$ and $N \geq 4$; the preset value is $2^m$ or A, $m \geq 0$, $A \geq 1$, and n, N, m and A are integers.

Optionally, the frequency-domain resource allocation granularity in the mapping relationship satisfies: $P = B * 2^n$, where P is the frequency-domain resource allocation granularity, $1 \leq n \leq N$, $N \geq 4$, $B \geq 1$, and n, B, N are integers.

Optionally, where the first BWP is an activated BWP on a carrier in an activated state; and/or, the first BWP is a preset BWP on a carrier in a deactivated state or on a carrier without any activated BWP. The preset BWP is one of the following:

a BWP with a smallest BWP index;
a BWP with a largest BWP index;
a BWP with a largest number of PRBs;
a BWP with a smallest number of PRBs; or,
a BWP indicated in the DCI.

Optionally, the network device 800 further includes: a second sending unit configured to send a higher-layer parameter to the terminal, where the higher-layer parameter carries the frequency-domain resource allocation granularity, where the frequency-domain resource allocation granularity carried in the higher-layer parameter is a frequency-domain resource allocation granularity jointly configured for the at least one carrier; or, the frequency-domain resource allocation granularity carried in the higher-layer parameter is a frequency-domain resource allocation granularity configured separately for each carrier in the at least one carrier.

Optionally, the network device 800 further includes:

a third sending unit configured to: in a case that the frequency-domain resource allocation granularity determined by the network device belongs to the candidate frequency-domain resource allocation granularity set, send a higher-layer parameter to the terminal, where the higher-layer parameter carries the frequency-domain resource allocation granularity; or,

a processing unit configured to: in a case that the frequency-domain resource allocation granularity determined by the network device does not belong to the candidate frequency-domain resource allocation granularity set, not send a higher-layer parameter, or send a higher-layer parameter to the terminal, where the higher-layer parameter does not carry the frequency-domain resource allocation granularity.

Optionally, a resource allocation type corresponding to the at least one carrier includes: a first resource allocation type and/or a second resource allocation type, where a bit map is used in the first indication field to indicate frequency-domain resource allocation of a carrier of a first resource allocation type, and/or a resource indication value (RIV) is used in the first indication field to indicate frequency-domain resource allocation of a carrier of a second resource allocation type. The determining unit 810 is further configured to:

determine a frequency-domain resource allocation granularity corresponding to each carrier of the first resource allocation type based on a number of PRBs of a first BWP on the at least one carrier; and/or,

determine a frequency-domain resource allocation granularity corresponding to each carrier of the first resource allocation type or the second resource allocation type based on higher-layer parameter configuration by the network device or agreement by a protocol.

Optionally, the generating unit 820 is further configured to:

determine a number of resource block groups (RBGs) corresponding to the first BWP on each carrier based on the frequency-domain resource allocation granularity for each carrier and the number of PRBs for the first BWP on each carrier;

determine a number of bits occupied by each carrier in the first indication field based on the number of RBGs corresponding to the first BWP on each carrier; and

generate the first indication field according to a predetermined order of the at least one carrier and the number of bits occupied by each carrier in the first indication field.

Optionally, the number of RBGs corresponding to the first BWP on each carrier is determined by the following formula: $N_{RBG}^{CCi} = \left\lceil \left( N_{BWP,k}^{size,CCi} + \left( N_{BWP,k}^{start,CCi} \bmod P \right) \right) / P \right\rceil$, where $N_{RBG}^{CCi}$ is a number of RBGs corresponding to the first BWP on an i-th carrier in the at least one carrier, $N_{BWP,k}^{size,CCi}$ is a number of PRBs of the first BWP on the i-th carrier, $N_{BWP,k}^{start,CCi}$ is an index of a starting PRB of the first BWP on the i-th carrier, and $P$ is the frequency-domain resource allocation granularity.

Optionally, the generating unit 820 is further configured to:

for each carrier, determine the number of RBGs as the number of bits occupied by the carrier in the first indication field; or,

for each carrier, determine the number of bits occupied by the carrier in the first indication field by using the formula $L_{cci} = \log_2 \left( N_{RBG}^{CCi} (N_{RBG}^{CCi} + 1)/2 \right)$, where $L_{cci}$ is a number of bits occupied by an i-th carrier in the first indication field, and $N_{RBG}^{CCi}$ is a number of RBGs corresponding to the i-th carrier.

Optionally, the predetermined order is one of the following:

cell indexes of cells correspond to indexes of all carriers in ascending order; or

cell indexes of cells correspond to indexes of all carriers in descending order.

It should be noted that the above apparatus provided in the embodiment of the present disclosure can implement all method steps implemented in the above embodiments about the information processing method at the network device side, and can achieve the same technical effects. Therefore, descriptions and beneficial effects of this embedment that are the same as the method embodiments will not be described here in detail.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (ROM), random access memory (RAM), magnetic disk, optical disc or other media that can store program codes.

An embodiment of the present disclosure further provides a processor readable storage medium, where the processor readable storage medium stores a computer program. The computer program is used for causing a processor to execute the above information processing method on the terminal side, or, the computer program is used for causing the processor to execute the above information processing method on the network device side, which can achieve the same beneficial effects. Therefore, descriptions and beneficial effects of this embedment that are the same as the method embodiments will not be described here in detail.

The processor readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, erasable programmable ROM (EPROM), electrically erasable programmable ROM (EEPROM), non-volatile memory (NAND FLASH), solid-state drive (SSD)), etc.

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer usable storage media (including but not limited to magnetic disk storage, optical storage, etc.) including a computer usable program code.

The present disclosure is described with reference to the flow chart and/or the block diagram of the method, device (system), and computer program product according to the embodiments of the present disclosure. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASIC), or one or more microprocessors (digital signal processor, DSP), or one or more field programmable gate arrays (FPGA). As another example, when a module described above is implemented in the form of program codes called by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Furthermore, it should be noted that in the apparatus and the method of the present disclosure, it is evident that each component or step can be decomposed and/or recombined. These decompositions and/or recombinations shall be considered as equivalent solutions to the present disclosure. Moreover, steps of executing the above series of processing can naturally be executed in chronological order according to the instructions, but they do not necessarily need to be executed in chronological order. Some steps can be executed in parallel or independently of each other. A person of ordinary skills in the art can understand all or any steps or components of the methods and apparatuses in the present disclosure, which can be implemented in any computing device (including a processor, a storage media, etc.) or a network of the computing device in hardware, firmware, software, or a combination thereof. This can be achieved by a person of ordinary skills in the art using their basic programming skills after reading the description of the present disclosure.

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1.  An information processing method, comprising:

    receiving, by a terminal, downlink control information (DCI) sent by a network device, wherein the DCI comprises a first indication field for indicating frequency-domain resource allocation of at least one carrier;
    determining, by the terminal, a frequency-domain resource allocation granularity corresponding to each carrier in the at least one carrier; and
    determining, by the terminal, a quantity of bits corresponding to each carrier in the first indication field based on the frequency-domain resource allocation granularity corresponding to each carrier.

2.  The information processing method according to claim 1, wherein the determining, by the terminal, the frequency-domain resource allocation granularity corresponding to each carrier in the at least one carrier comprises:

determining, by the terminal, the frequency-domain resource allocation granularity corresponding to each carrier in the at least one carrier based on a number of physical resource blocks (PRBs) of a first bandwidth part (BWP) on the at least one carrier; or,

determining, by the terminal, the frequency-domain resource allocation granularity corresponding to each carrier in the at least one carrier based on higher-layer parameter configuration by the network device or agreement by a protocol.

3. The information processing method according to claim 2, wherein the determining, by the terminal, the frequency-domain resource allocation granularity corresponding to each carrier in the at least one carrier based on the number of the physical resource blocks (PRBs) of the first bandwidth part (BWP) on the at least one carrier comprises:

determining, by the terminal, a total number of PRBs of a first BWP on at least one schedulable carrier configured by the DCI;

determining, by the terminal, a first frequency-domain resource allocation granularity corresponding to the total number of PRBs of the first BWP based on a mapping relationship between different PRB numerical ranges and frequency-domain resource allocation granularities, wherein a maximum value in the PRB numerical ranges is a maximum total number of PRBs configurable for the at least one schedulable carrier configured by the DCI; and

determining, by the terminal, the first frequency-domain resource allocation granularity as the frequency-domain resource allocation granularity corresponding to each carrier in the at least one carrier.

4. The information processing method according to claim 3, wherein a maximum value of the frequency-domain resource allocation granularities in the mapping relationship is greater than 16.

5. The information processing method according to claim 2, wherein the determining, by the terminal, the frequency-domain resource allocation granularity corresponding to each carrier in the at least one carrier based on the number of the physical resource blocks (PRBs) of the first bandwidth part (BWP) on the at least one carrier comprises:

for each carrier in the at least one carrier, determining, by the terminal, a number of PRBs of a first BWP on a first carrier, wherein the first carrier is any carrier of the at least one carrier;

determining, by the terminal, a second frequency-domain resource allocation granularity corresponding to the number of the PRBs of the first BWP on the first carrier based on a mapping relationship between different PRB numerical ranges and frequency-domain resource allocation granularities, wherein a maximum value in the PRB numerical ranges is a maximum number of PRBs configurable for one carrier; and

determining, by the terminal, the frequency-domain resource allocation granularity corresponding to the first carrier based on the second frequency-domain resource allocation granularity.

6. The information processing method according to claim 5, wherein the determining, by the terminal, the frequency-domain resource allocation granularity corresponding to the first carrier based on the second frequency-domain resource allocation granularity comprises:

determining, by the terminal, a product of the second frequency-domain resource allocation granularity and a preset value as the frequency-domain resource allocation granularity corresponding to the first carrier,

wherein the frequency-domain resource allocation granularity in the mapping relationship satisfies: $P = 2^n$, where P is the frequency-domain resource allocation granularity, $1 \leq n \leq N$ and $N \geq 4$; the preset value is $2^m$ or A, $m \geq 0$, $A \geq 1$, and n, N, m and A are integers.

7. The information processing method according to claim 5, wherein the frequency-domain resource allocation granularity in the mapping relationship satisfies: $P = B * 2^n$, where P is the frequency-domain resource allocation granularity, $1 \leq n \leq N$, $N \geq 4$, $B \geq 1$, and n, B, N are integers.

8. The information processing method according to claim 2, 3 or 5, wherein the first BWP is an activated BWP on a carrier in an activated state; and/or,

the first BWP is a preset BWP on a carrier in a deactivated state or on a carrier without any activated BWP, wherein the preset BWP is one of the following:

a BWP with a smallest BWP index;
a BWP with a largest BWP index;

a BWP with a largest number of PRBs;
a BWP with a smallest number of PRBs; or,
a BWP indicated in the DCI.

9.  The information processing method according to claim 2, wherein the determining, by the terminal, the frequency-domain resource allocation granularity corresponding to each carrier in the at least one carrier based on the higher-layer parameter configuration by the network device or the agreement by the protocol comprises:

receiving, by the terminal, a higher-layer parameter sent by the network device, and determining the frequency-domain resource allocation granularity corresponding to each carrier in the at least one carrier based on a frequency-domain resource allocation granularity carried in the higher-layer parameter; and/or,
determining the frequency-domain resource allocation granularity corresponding to each carrier in the at least one carrier based on a preset frequency-domain resource allocation granularity, wherein the preset frequency-domain resource allocation granularity is configured by the network device or agreed upon by the protocol.

10. The information processing method according to claim 9, wherein the frequency-domain resource allocation granularity carried in the higher-layer parameter is a frequency-domain resource allocation granularity jointly configured for the at least one carrier; or,
the frequency-domain resource allocation granularity carried in the higher-layer parameter is a frequency-domain resource allocation granularity configured separately for each carrier in the at least one carrier.

11. The information processing method according to claim 1 or 2, wherein a resource allocation type corresponding to the at least one carrier comprises: a first resource allocation type and/or a second resource allocation type, wherein a bit map is used in the first indication field to indicate frequency-domain resource allocation of a carrier of a first resource allocation type, and/or a resource indication value (RIV) is used in the first indication field to indicate frequency-domain resource allocation of a carrier of a second resource allocation type;
wherein the determining, by the terminal, the frequency-domain resource allocation granularity corresponding to each carrier in the at least one carrier comprises:

determining, by the terminal, a frequency-domain resource allocation granularity corresponding to each carrier of the first resource allocation type based on a number of PRBs of a first BWP on the at least one carrier; or,
determining, by the terminal, a frequency-domain resource allocation granularity corresponding to each carrier of the first resource allocation type or the second resource allocation type based on higher-layer parameter configuration by the network device or agreement by a protocol.

12. The information processing method according to claim 1 or 2, wherein the determining, by the terminal, the quantity of bits corresponding to each carrier in the first indication field based on the frequency-domain resource allocation granularity corresponding to each carrier comprises:

determining, by the terminal, a number of resource block groups (RBGs) corresponding to a first BWP on each carrier based on the frequency-domain resource allocation granularity corresponding to each carrier and a number of PRBs of the first BWP on each carrier;
determining, by the terminal, a number of bits occupied by each carrier in the first indication field based on the number of the RBGs corresponding to the first BWP on each carrier; and
determining, by the terminal, bits corresponding to each carrier in the first indication field according to the number of the bits occupied by each carrier in the first indication field, and a predetermined order of the at least one carrier.

13. The information processing method according to claim 12, wherein the number of the RBGs corresponding to the first BWP on each carrier is determined by the following formula:

$$N_{RBG}^{CCi} = \left\lceil \left( N_{BWP,k}^{size,CCi} + \left( N_{BWP,k}^{start,CCi} \bmod P \right) \right) / P \right\rceil,$$

wherein $N_{RBG}^{CCi}$ is a number of RBGs corresponding to the first BWP on an i-th carrier in the at least one carrier, $N_{BWP,k}^{size,CCi}$ is a number of PRBs of the first BWP on the i-th carrier, $N_{BWP,k}^{start,CCi}$ is an index of a starting PRB of the first BWP on the i-th carrier, and P is the frequency-domain resource allocation granularity.

14. The information processing method according to claim 12 or 13, wherein the determining, by the terminal, the number of the bits occupied by each carrier in the first indication field based on the number of the RBGs corresponding to each carrier comprises:

for each carrier, determining, by the terminal, the number of the RBGs as the number of the bits occupied by the carrier in the first indication field; or,
for each carrier, determining, by the terminal, the number of bits occupied by the carrier in the first indication field by using a formula $L_{cci} = \log_2\left(N_{RBG}^{CCi}(N_{RBG}^{CCi} + 1)/2\right)$, wherein $L_{cci}$ is a number of bits occupied by an i-th carrier in the first indication field, and $N_{RBG}^{CCi}$ is a number of RBGs corresponding to the i-th carrier.

15. The information processing method according to claim 12, wherein the predetermined order is one of the following:

cell indexes of cells correspond to indexes of all carriers in ascending order; or
cell indexes of cells correspond to indexes of all carriers in descending order.

16. An information processing method, comprising:

determining, by a network device, a frequency-domain resource allocation granularity corresponding to each carrier in at least one carrier;
generating, by the network device, a first indication field based on the frequency-domain resource allocation granularity corresponding to each carrier, wherein the first indication field is used to indicate frequency-domain resource allocation of the at least one carrier; and
sending, by the network device, downlink control information (DCI) to a terminal, wherein the DCI comprises the first indication field.

17. The information processing method according to claim 16, wherein the determining, by the network device, the frequency-domain resource allocation granularity corresponding to each carrier in the at least one carrier comprises:

determining, by the network device, the frequency-domain resource allocation granularity corresponding to each carrier in the at least one carrier based on a number of physical resource blocks (PRBs) of a first bandwidth part (BWP) on the at least one carrier; or,
determining, by the network device, the frequency-domain resource allocation granularity corresponding to each carrier in the at least one carrier based on a candidate frequency-domain resource allocation granularity set.

18. The information processing method according to claim 16 or 17, wherein after determining the frequency-domain resource allocation granularity corresponding to each carrier in the at least one carrier, the method further comprises:

sending, by the network device, a higher-layer parameter to the terminal, wherein the higher-layer parameter carries the frequency-domain resource allocation granularity,
wherein the frequency-domain resource allocation granularity carried in the higher-layer parameter is a frequency-domain resource allocation granularity jointly configured for the at least one carrier; or, the frequency-domain resource allocation granularity carried in the higher-layer parameter is a frequency-domain resource allocation granularity configured separately for each carrier in the at least one carrier.

19. The information processing method according to claim 17, wherein after determining the frequency-domain resource allocation granularity corresponding to each carrier in the at least one carrier, the method further comprises:

in a case that the frequency-domain resource allocation granularity determined by the network device belongs to the candidate frequency-domain resource allocation granularity set, sending, by the network device, a higher-layer parameter to the terminal, wherein the higher-layer parameter carries the frequency-domain resource allocation granularity; or,
in a case that the frequency-domain resource allocation granularity determined by the network device does not belong to the candidate frequency-domain resource allocation granularity set, not sending, by the network device, a higher-layer parameter, or sending, by the network device, a higher-layer parameter to the terminal, wherein the higher-layer parameter does not carry the frequency-domain resource allocation granularity.

20. An information processing apparatus, comprising: a memory, a transceiver and a processor, wherein the memory is configured to store a computer program; the transceiver is configured to receive and transmit data under the control of the processor; and the processor is configured to read the computer program from the memory to perform the following operations:

receiving downlink control information (DCI) sent by a network device, wherein the DCI comprises a first indication field for indicating frequency-domain resource allocation of at least one carrier;
determining a frequency-domain resource allocation granularity corresponding to each carrier in the at least one carrier; and
determining a quantity of bits corresponding to each carrier in the first indication field based on the frequency-domain resource allocation granularity corresponding to each carrier.

21. The information processing apparatus according to claim 20, wherein the processor is further configured to read the computer program from the memory to perform the following operations:

determining the frequency-domain resource allocation granularity corresponding to each carrier in the at least one carrier based on a number of physical resource blocks (PRBs) of a first bandwidth part (BWP) on the at least one carrier; or,
determining the frequency-domain resource allocation granularity corresponding to each carrier in the at least one carrier based on higher-layer parameter configuration by the network device or agreement by a protocol.

22. The information processing apparatus according to claim 21, wherein the processor is further configured to read the computer program from the memory to perform the following operations:

determining a total number of PRBs of a first BWP on at least one schedulable carrier configured by the DCI;
determining a first frequency-domain resource allocation granularity corresponding to the total number of PRBs of the first BWP based on a mapping relationship between different PRB numerical ranges and frequency-domain resource allocation granularities, wherein a maximum value in the PRB numerical ranges is a maximum total number of PRBs configurable for the at least one schedulable carrier configured by the DCI; and
determining the first frequency-domain resource allocation granularity as the frequency-domain resource allocation granularity corresponding to each carrier in the at least one carrier.

23. The information processing apparatus according to claim 22, wherein a maximum value of the frequency-domain resource allocation granularities in the mapping relationship is greater than 16.

24. The information processing apparatus according to claim 21, wherein the processor is further configured to read the computer program from the memory to perform the following operations:

for each carrier in the at least one carrier, determining a number of PRBs of a first BWP on a first carrier, wherein the first carrier is any carrier of the at least one carrier;
determining a second frequency-domain resource allocation granularity corresponding to the number of the PRBs of the first BWP on the first carrier based on a mapping relationship between different PRB numerical ranges and frequency-domain resource allocation granularities, wherein a maximum value in the PRB numerical ranges is a maximum number of PRBs configurable for one carrier; and
determining the frequency-domain resource allocation granularity corresponding to the first carrier based on the second frequency-domain resource allocation granularity.

25. The information processing apparatus according to claim 24, wherein the processor is further configured to read the computer program from the memory to perform the following operations:

determining a product of the second frequency-domain resource allocation granularity and a preset value as the frequency-domain resource allocation granularity corresponding to the first carrier,
wherein the frequency-domain resource allocation granularity in the mapping relationship satisfies: $P = 2^n$, where P is the frequency-domain resource allocation granularity, $1 \leq n \leq N$ and $N \geq 4$; the preset value is $2^m$ or A, $m \geq 0$, $A \geq 1$, and n, N, m and A are integers.

26. The information processing apparatus according to claim 24, wherein the frequency-domain resource allocation granularity in the mapping relationship satisfies: $P = B * 2^n$, where P is the frequency-domain resource allocation

granularity, $1 \leq n \leq N$, $N \geq 4$, $B \geq 1$, and n, B, N are integers.

27. The information processing apparatus according to claim 21, 22, or 24, wherein the first BWP is an activated BWP on a carrier in an activated state; and/or,

the first BWP is a preset BWP on a carrier in a deactivated state or on a carrier without any activated BWP, wherein the preset BWP is one of the following:

a BWP with a smallest BWP index;
a BWP with a largest BWP index;
a BWP with a largest number of PRBs;
a BWP with a smallest number of PRBs; or,
a BWP indicated in the DCI.

28. The information processing apparatus according to claim 21, wherein the processor is further configured to read the computer program from the memory to perform the following operations:

receiving a higher-layer parameter sent by the network device, and determining the frequency-domain resource allocation granularity corresponding to each carrier in the at least one carrier based on a frequency-domain resource allocation granularity carried in the higher-layer parameter; and/or,
determining the frequency-domain resource allocation granularity corresponding to each carrier in the at least one carrier based on a preset frequency-domain resource allocation granularity, wherein the preset frequency-domain resource allocation granularity is configured by the network device or agreed upon by the protocol.

29. The information processing apparatus according to claim 28, wherein the frequency-domain resource allocation granularity carried in the higher-layer parameter is a frequency-domain resource allocation granularity jointly configured for the at least one carrier; or,
the frequency-domain resource allocation granularity carried in the higher-layer parameter is a frequency-domain resource allocation granularity configured separately for each carrier in the at least one carrier.

30. The information processing apparatus according to claim 20 or 21, wherein a resource allocation type corresponding to the at least one carrier comprises: a first resource allocation type and/or a second resource allocation type, wherein a bit map is used in the first indication field to indicate frequency-domain resource allocation of a carrier of a first resource allocation type, and/or a resource indication value (RIV) is used in the first indication field to indicate frequency-domain resource allocation of a carrier of a second resource allocation type;
the processor is further configured to read the computer program from the memory to perform the following operations:

determining a frequency-domain resource allocation granularity corresponding to each carrier of the first resource allocation type based on a number of PRBs of a first BWP on the at least one carrier; or,
determining a frequency-domain resource allocation granularity corresponding to each carrier of the first resource allocation type or the second resource allocation type based on higher-layer parameter configuration by the network device or agreement by a protocol.

31. The information processing apparatus according to claim 20 or 21, wherein the processor is further configured to read the computer program from the memory to perform the following operations:

determining a number of resource block groups (RBGs) corresponding to a first BWP on each carrier based on the frequency-domain resource allocation granularity corresponding to each carrier and a number of PRBs of the first BWP on each carrier;
determining a number of bits occupied by each carrier in the first indication field based on the number of the RBGs corresponding to the first BWP on each carrier; and
determining the bit position corresponding to each carrier in the first indication field according to the number of the bits occupied by each carrier in the first indication field, and a predetermined order of the at least one carrier.

32. The information processing apparatus according to claim 31, wherein the number of the RBGs corresponding to the first BWP on each carrier is determined by the following formula:

$$N_{RBG}^{CCi} = \left\lceil \left( N_{BWP,k}^{size,CCi} + \left( N_{BWP,k}^{start,CCi} \bmod P \right) \right) / P \right\rceil,$$

wherein $N_{RBG}^{CCi}$ is a number of RBGs corresponding to the first BWP on an i-th carrier in the at least one carrier, $N_{BWP,k}^{size,CCi}$ is a number of PRBs of the first BWP on the i-th carrier, $N_{BWP,k}^{start,CCi}$ is an index of a starting PRB of the first BWP on the i-th carrier, and P is the frequency-domain resource allocation granularity.

33. The information processing apparatus according to claim 31 or 32, wherein the processor is further configured to read the computer program from the memory to perform the following operations:

for each carrier, determining the number of the RBGs as the number of the bits occupied by the carrier in the first indication field; or,
for each carrier, determining the number of bits occupied by the carrier in the first indication field by using a formula $L_{cci} = \log_2\left( N_{RBG}^{CCi}(N_{RBG}^{CCi} + 1)/2 \right)$, wherein $L_{cci}$ is a number of bits occupied by an i-th carrier in the first indication field, and $N_{RBG}^{CCi}$ is a number of RBGs corresponding to the i-th carrier.

34. The information processing apparatus according to claim 31, wherein the predetermined order is one of the following:

cell indexes of cells correspond to indexes of all carriers in ascending order; or
cell indexes of cells correspond to indexes all carriers in descending order.

35. A terminal, comprising:

a receiving unit, configured to receive downlink control information (DCI) sent by a network device, wherein the DCI comprises a first indication field for indicating frequency-domain resource allocation of at least one carrier;
a first determining unit, configured to determine a frequency-domain resource allocation granularity corresponding to each carrier in the at least one carrier; and
a second determining unit, configured to determine a quantity of bits corresponding to each carrier in the first indication field based on the frequency-domain resource allocation granularity corresponding to each carrier.

36. The terminal according to claim 35, wherein the first determining unit is further configured to:

determine the frequency-domain resource allocation granularity corresponding to each carrier in the at least one carrier based on a number of physical resource blocks (PRBs) of a first bandwidth part (BWP) on the at least one carrier; or,
determine the frequency-domain resource allocation granularity corresponding to each carrier in the at least one carrier based on higher-layer parameter configuration by the network device or agreement by a protocol.

37. The terminal according to claim 36, wherein the first determining unit is further configured to:

determine a total number of PRBs of a first BWP on at least one schedulable carrier configured by the DCI;
determine a first frequency-domain resource allocation granularity corresponding to the total number of PRBs of the first BWP based on a mapping relationship between different PRB numerical ranges and frequency-domain resource allocation granularities, wherein a maximum value in the PRB numerical ranges is a maximum total number of PRBs configurable for the at least one schedulable carrier configured by the DCI; and
determine the first frequency-domain resource allocation granularity as the frequency-domain resource allocation granularity corresponding to each carrier in the at least one carrier.

38. The terminal according to claim 37, wherein a maximum value of the frequency-domain resource allocation granularities in the mapping relationship is greater than 16.

39. The terminal according to claim 36, wherein the first determining unit is further configured to:

for each carrier in the at least one carrier, determine a number of PRBs of a first BWP on a first carrier, wherein the first carrier is any carrier of the at least one carrier;
determine a second frequency-domain resource allocation granularity corresponding to the number of the PRBs of the first BWP on the first carrier based on a mapping relationship between different PRB numerical ranges and frequency-domain resource allocation granularities, wherein a maximum value in the PRB numerical ranges is a maximum number of PRBs configurable for one carrier; and
determine the frequency-domain resource allocation granularity corresponding to the first carrier based on the second frequency-domain resource allocation granularity.

40. The terminal according to claim 39, wherein the first determining unit is further configured to:

determine a product of the second frequency-domain resource allocation granularity and a preset value as the frequency-domain resource allocation granularity corresponding to the first carrier,
wherein the frequency-domain resource allocation granularity in the mapping relationship satisfies: $P = 2^n$, where P is the frequency-domain resource allocation granularity, $1 \leq n \leq N$ and $N \geq 4$; the preset value is $2^m$ or A, $m \geq 0$, $A \geq 1$, and n, N, m and A are integers.

41. The terminal according to claim 39, wherein the frequency-domain resource allocation granularity in the mapping relationship satisfies: $P = B * 2^n$, where P is the frequency-domain resource allocation granularity, $1 \leq n \leq N$, $N \geq 4$, $B \geq 1$, and n, B, N are integers.

42. The terminal according to claim 36, 37, or 39, wherein the first BWP is an activated BWP on a carrier in an activated state; and/or,

the first BWP is a preset BWP on a carrier in a deactivated state or on a carrier without any activated BWP, wherein the preset BWP is one of the following:

a BWP with a smallest BWP index;
a BWP with a largest BWP index;
a BWP with a largest number of PRBs;
a BWP with a smallest number of PRBs; or,
a BWP indicated in the DCI.

43. The terminal according to claim 36, wherein the determining, by the terminal, the frequency-domain resource allocation granularity corresponding to each carrier in the at least one carrier based on the higher-layer parameter configuration by the network device or the agreement by the protocol comprises:

receiving, by the terminal, a higher-layer parameter sent by the network device, and determining the frequency-domain resource allocation granularity corresponding to each carrier in the at least one carrier based on a frequency-domain resource allocation granularity carried in the higher-layer parameter; and/or,
determining the frequency-domain resource allocation granularity corresponding to each carrier in the at least one carrier based on a preset frequency-domain resource allocation granularity, wherein the preset frequency-domain resource allocation granularity is configured by the network device or agreed upon by the protocol.

44. The terminal according to claim 43, wherein the frequency-domain resource allocation granularity carried in the higher-layer parameter is a frequency-domain resource allocation granularity jointly configured for the at least one carrier; or,
the frequency-domain resource allocation granularity carried in the higher-layer parameter is a frequency-domain resource allocation granularity configured separately for each carrier in the at least one carrier.

45. The terminal according to claim 35 or 36, wherein a resource allocation type corresponding to the at least one carrier comprises: a first resource allocation type and/or a second resource allocation type, wherein a bit map is used in the first indication field to indicate frequency-domain resource allocation of a carrier of a first resource allocation type, and/or a resource indication value (RIV) is used in the first indication field to indicate frequency-domain resource allocation of a carrier of a second resource allocation type;
the first determining unit is further configured to:

determine a frequency-domain resource allocation granularity corresponding to each carrier of the first resource allocation type based on a number of PRBs of a first BWP on the at least one carrier; or,

determine a frequency-domain resource allocation granularity corresponding to each carrier of the first resource allocation type or the second resource allocation type based on higher-layer parameter configuration by the network device or agreement by a protocol.

46. The terminal according to claim 35 or 36, wherein the second determining unit is further configured to:

determine a number of resource block groups (RBGs) corresponding to a first BWP on each carrier based on the frequency-domain resource allocation granularity corresponding to each carrier and a number of PRBs of the first BWP on each carrier;

determine a number of bits occupied by each carrier in the first indication field based on the number of the RBGs corresponding to the first BWP on each carrier; and

determine the bit position corresponding to each carrier in the first indication field according to the number of the bits occupied by each carrier in the first indication field, and a predetermined order of the at least one carrier.

47. The terminal according to claim 46, wherein the number of the RBGs corresponding to the first BWP on each carrier is determined by the following formula:

$$N_{RBG}^{CCi} = \left\lceil \left( N_{BWP,k}^{size,CCi} + \left( N_{BWP,k}^{start,CCi} \bmod P \right) \right)/P \right\rceil,$$

wherein $N_{RBG}^{CCi}$ is a number of RBGs corresponding to the first BWP on an i-th carrier in the at least one carrier, $N_{BWP,k}^{size,CCi}$ is a number of PRBs of the first BWP on the i-th carrier, $N_{BWP,k}^{start,CCi}$ is an index of a starting PRB of the first BWP on the i-th carrier, and P is the frequency-domain resource allocation granularity.

48. The terminal according to claim 46 or 47, wherein the second determining unit is further configured to:

for each carrier, determine the number of the RBGs as the number of the bits occupied by the carrier in the first indication field; or,

for each carrier, determine the number of bits occupied by the carrier in the first indication field by using a formula $L_{cci} = \log_2 \left( N_{RBG}^{CCi} (N_{RBG}^{CCi} + 1)/2 \right)$, wherein $L_{cci}$ is a number of bits occupied by an i-th carrier in the first indication field, and $N_{RBG}^{CCi}$ is a number of RBGs corresponding to the i-th carrier.

49. The terminal according to claim 46, wherein the predetermined order is one of the following:

cell indexes of cells correspond to indexes of all carriers in ascending order; or
cell indexes of cells correspond to indexes of all carriers in descending order.

50. An information processing apparatus, comprising: a memory, a transceiver and a processor, wherein the memory is configured to store a computer program; the transceiver is configured to receive and transmit data under the control of the processor; and the processor is configured to read the computer program from the memory to perform the following operations:

determining a frequency-domain resource allocation granularity corresponding to each carrier in at least one carrier;

generating a first indication field based on the frequency-domain resource allocation granularity corresponding to each carrier, wherein the first indication field is used to indicate frequency-domain resource allocation of the at least one carrier; and

sending downlink control information (DCI) to a terminal, wherein the DCI comprises the first indication field.

51. The information processing apparatus according to claim 50, wherein the processor is further configured to read the computer program from the memory to perform the following operations:

determining the frequency-domain resource allocation granularity corresponding to each carrier in the at least one carrier based on a number of physical resource blocks (PRBs) of a first bandwidth part (BWP) on the at least one carrier; or,
determining the frequency-domain resource allocation granularity corresponding to each carrier in the at least one carrier based on a candidate frequency-domain resource allocation granularity set.

52. The information processing apparatus according to claim 50 or 51, wherein the processor is further configured to read the computer program from the memory to perform the following operations:

sending a higher-layer parameter to the terminal, wherein the higher-layer parameter carries the frequency-domain resource allocation granularity,
wherein the frequency-domain resource allocation granularity carried in the higher-layer parameter is a frequency-domain resource allocation granularity jointly configured for the at least one carrier; or, the frequency-domain resource allocation granularity carried in the higher-layer parameter is a frequency-domain resource allocation granularity configured separately for each carrier in the at least one carrier.

53. The information processing apparatus according to claim 51, wherein the processor is configured to read the computer program from the memory to perform the following operations:

in a case that the frequency-domain resource allocation granularity determined belongs to the candidate frequency-domain resource allocation granularity set, sending a higher-layer parameter to the terminal, wherein the higher-layer parameter carries the frequency-domain resource allocation granularity; or,
in a case that the frequency-domain resource allocation granularity determined does not belong to the candidate frequency-domain resource allocation granularity set, not sending a higher-layer parameter, or sending a higher-layer parameter to the terminal, wherein the higher-layer parameter does not carry the frequency-domain resource allocation granularity.

54. A network device, comprising:

a determining unit, configured to determine a frequency-domain resource allocation granularity corresponding to each carrier in at least one carrier;
a generation unit, configured to generate a first indication field based on the frequency-domain resource allocation granularity corresponding to each carrier, wherein the first indication field is used to indicate frequency-domain resource allocation of the at least one carrier; and
a first sending unit, configured to send downlink control information (DCI) to a terminal, wherein the DCI comprises the first indication field.

55. A processor-readable storage medium, wherein the processor-readable storage medium comprises a computer program, the computer program is configured to cause a processor to perform steps of the information processing method according to any one of claims 1-15, or the computer program is configured to cause a processor to perform steps of the information processing method according to any one of claims 16-19.

FIG. 1

FIG. 2

determining, by a network device, a frequency-domain resource scheduling allocation corresponding to each carrier in at least one carrier ⟋31

generating, by the network device, a first indication field based on the frequency-domain resource allocation granularity corresponding to each carrier, where the first indication field is used to indicate frequency-domain resource allocation of the at least one carrier ⟋32

sending, by the network device, DCI to a terminal, where the DCI includes the first indication field ⟋33

FIG. 3

| CC1=N1 | CC2=N2 | CC3=N3 | CC4=N4 |

FDRA fields of all carriers in multi-carrier scheduling DCI

FIG. 4

processor 53

bus interface

transceiver 52

memory 51

user interface 54

FIG. 5

FIG. 6

FIG. 7

FIG. 8

## INTERNATIONAL SEARCH REPORT

| International application No. |
|---|
| **PCT/CN2024/074650** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

3GPP, CNKI, CNTXT, ENTXTC, VEN, IEEE: 下行控制信息, 指示域, 多载波, 调度, 频域资源, 比特, 压缩, DCI, FDRA, BWP, RBG, PRB

**C. DOCUMENTS CONSIDERED TO BE RELEVANT**

| Category* | Citation of document, with indication, where appropriate, of the relevant passages | Relevant to claim No. |
|---|---|---|
| X | CN 113630874 A (VIVO COMMUNICATION TECHNOLOGY CO., LTD.) 09 November 2021 (2021-11-09) description, paragraphs [0002]-[0003], [0005]-[0097], and [0111]-[0351] | 1-55 |
| A | CN 113541888 A (VIVO COMMUNICATION TECHNOLOGY CO., LTD.) 22 October 2021 (2021-10-22) entire document | 1-55 |
| A | NOKIA et al. "On resource allocation in frequency domain for PDSCH and PUSCH in NR" *3GPP TSG RAN WG1 Ad Hoc Meeting #2 R1-1710989*, 17 June 2017 (2017-06-17), entire document | 1-55 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 April 2024** | **22 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/074650**

| Patent document cited in search report | | | Publication date (day/month/year) | Patent family member(s) | Publication date (day/month/year) |
|---|---|---|---|---|---|
| CN | 113630874 | A | 09 November 2021 | None | |
| CN | 113541888 | A | 22 October 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310147657X